# EUROPEAN PATENT SPECIFICATION

(11) **EP 3 040 985 B1**
(45) Date of publication and mention of the grant of the patent: **23.08.2023**
(21) Application number: 14840410.6
(22) Date of filing: 26.08.2014
(51) Int. Cl.: G10L 15/32, G10L 15/22, G10L 15/30, G10L 17/00, G06F 1/3231

(54) **ELECTRONIC DEVICE AND METHOD FOR VOICE RECOGNITION**
ELEKTRONISCHE VORRICHTUNG UND VERFAHREN ZUR SPRACHERKENNUNG
DISPOSITIF ÉLECTRONIQUE ET PROCÉDÉ DE RECONNAISSANCE VOCALE

(30) Priority: 26.08.2013 KR 20130101411
(43) Date of publication of application: 06.07.2016
(73) Proprietor: Samsung Electronics Co., Ltd., Gyeonggi-do 16677 (KR)
(72) Inventor: LEE, Sang-Hoon, Yongin-si Gyeonggi-do 448-713 (KR); KANG, Hyuk, Yongin-si Gyeonggi-do 448-550 (KR); KIM, Kyung-Tae, Hwaseong-si Gyeonggi-do 445-160 (KR); JE, Seong-Min, Bucheon-si Gyeonggi-do 420-856 (KR); JUNG, Seok-Yeong, Yongin-si Gyeonggi-do 446-987 (KR)
(74) Representative: HGF
(86) International application number: PCT/KR2014/007951
(87) International publication number: WO 2015/030474

(56) References cited:
- KR-A- 20040 072 691
- KR-A- 20120 066 561
- KR-A- 20120 066 561
- KR-A- 20130 083 371
- US-A1- 2004 034 527
- US-A1- 2009 204 409
- US-A1- 2012 010 890
- US-B1- 6 185 535
- US-B1- 6 185 535

## Description

### Technical Field

The present disclosure relates to an electronic device and various embodiments relate to a configuration for voice recognition.

### Background Art

In general, people may have their own unique voices and the voice itself may be used as an authentication means.

A voice recognition device may recognize a voice of a particular person by using a voice recognition model having collected the voice of the particular person and information on the voice, which is called speaker verification. The voice recognition device may distinguish a voice of a speaker by using a voice recognition model trained in advance for recognizing voices of a plurality of people, which is called speaker identification.

The voice recognition device using the speaker verification or the speaker identification may train the voice recognition model by using a particular phrase and, in this case, recognize a voice only when a particular speaker speaks the particular phrase, thereby having a higher security performance.

Further, the voice recognition device may recognize a voice by using an isolated word recognition method that recognizes only a predetermined particular word. The isolated word recognition method refers to a method of generating a template of each particular word and comparing it with an input speech. The voice recognition device using the isolated word recognition method recognizes only a predetermined particular word, and thus has a relatively high voice recognition rate and has a relatively low voice recognition failure rate by background noise. Accordingly, the isolated word recognition method has a smaller calculation amount and uses less memory compared to Large Vocabulary Speech Recognition (LVSR), in which all speech can be converted into text, and natural voice recognition, so that the isolated word recognition method can be easily used in a portable terminal device.

### Disclosure

### Technical Problem

As described above, the voice recognition device recognizes a voice by using the speaker verification or the speaker identification or recognizes a voice by using the isolated word recognition method.

However, the conventional voice recognition device has a problem in that performing the voice recognition method having a large calculation amount is difficult when a low power processor is mounted.

Further, the conventional voice recognition device has a disadvantage of large power consumption when a high performance processor is mounted since high performance pre-processing and high performance voice recognition are performed.

US2009/204409 A1 concerns systems and methods for improving the interaction between a user and a small electronic device such as a Bluetooth headset. The use of a voice user interface in electronic devices may be used. In one embodiment, recognition processing limitations of some devices are overcome by employing speech synthesizers and recognizers in series where one electronic device responds to simple audio commands and sends audio requests to a remote device with more significant recognition analysis capability. Embodiments of the present invention may include systems and methods for utilizing speech recognizers and synthesizers in series to provide simple, reliable, and hands-free interfaces with users.

US2012/010890 A1 concerns an Always On, Hands-free, Speech Activated, Power-optimized Wireless Communications Device with associated base. A person can use the device at any time, 24×7, with hands-free operation. People can wear it 24×7 on their body either around their neck or on their wrist or wherever it best meets their needs. The wireless communications device may host simple, low power applications. In addition, applications will reside in the base, and in an application (either voice or data) server that is accessed by the wireless communications base.

### Technical solution

Accordingly, various embodiments of the present invention provide an electronic device and a method for recognizing a voice by using two or more processors including a processor having low power consumption and a processor conducting high performance voice recognition.

According to various embodiments of the present invention a method is provided according to claim 1.
According to various embodiments of the present invention, an electronic device is provided according to claim 6.

### Advantageous Effects

According to various embodiments of the present invention, it is possible to maintain a voice recognition system capable of having low power consumption and always being in a standby state, to perform natural voice recognition which can respond to various queries of a user, to respond to a particular voice command for an application requiring a rapid operation reaction, and to perform voice recognition having a high voice recognition rate even though a voice signal input for the voice recognition is distorted.

### Brief Description of the Drawings

FIG. 1 illustrates a network environment including an electronic device according to various embodiments;
FIG. 2 illustrates a configuration of a first voice recognition processor and a second voice recognition processor according to various embodiments;
FIG. 3 illustrates a configuration of the first voice recognition processor and the second voice recognition processor according to various embodiments;
FIG. 4 illustrates a configuration of the first voice recognition processor and the second voice recognition processor according to various embodiments;
FIG. 5 illustrates a configuration of the first voice recognition processor and the second voice recognition processor according to various embodiments;
FIG. 6 illustrates a configuration of the first voice recognition processor, the second voice recognition processor, and a third voice recognition processor according to illustrative examples not forming part of the invention;
FIG. 7 illustrates a configuration of the first voice recognition processor, the second voice recognition processor, and the third voice recognition processor according to illustrative examples not forming part of the invention;
FIG. 8 illustrates a configuration of a preprocessing unit according to illustrative examples not forming part of the invention;
FIG. 9 is a flowchart illustrating a process in which a controller performs voice recognition through the first voice recognition processor or the second voice recognition processor according to illustrative examples not forming part of the invention;
FIG. 10 is a flowchart illustrating a process in which the controller performs voice recognition through the first voice recognition processor or the second voice recognition processor according to illustrative examples not forming part of the invention;
FIG. 11 is a flowchart illustrating a process in which the controller performs voice recognition through the first voice recognition processor or the second voice recognition processor according to various embodiments;
FIG. 12 is a flowchart illustrating a process in which a controller performs voice recognition through the first voice recognition processor or the second voice recognition processor according to various embodiments;
FIG. 13 illustrates a process of performing voice recognition through the first voice recognition processor, the second voice recognition processor, and the third voice recognition processor according to illustrative examples not forming part of the invention;
FIG. 14 illustrates a process of performing voice recognition through the first voice recognition processor, the second voice recognition processor, and the third voice recognition processor according to illustrative examples not forming part of the invention;
FIG. 15 illustrates a process of performing voice recognition through the first voice recognition processor, the second voice recognition processor, and the third voice recognition processor according to illustrative examples not forming part of the invention;
FIG. 16 illustrates a process of upgrading a voice recognition model through the third voice recognition processor according to illustrative examples not forming part of the invention; and
FIG. 17 is a block diagram of an electronic device according to various embodiments.

### Best Mode for Carrying out the Invention

Hereinafter, various embodiments of the present invention will be described in connection with the accompanying drawings. The present invention may be modified in various forms and include various embodiments, but specific examples are illustrated in the drawings and described in the description. However, the description is not intended to limit the present invention to the specific embodiments. In the description of the drawings, identical or similar reference numerals are used to designate identical or similar elements.

Hereinafter, the terms "include" or "may include", which may be used in various embodiments of the present invention, refer to the presence of disclosed functions, operations or elements, and do not restrict the addition of one or more functions, operations or elements. In the present invention, the terms such as "include" or "have" may be construed to denote a certain characteristic, number, step, operation, constituent element, component or a combination thereof, but may not be construed to exclude the existence of or a possibility of addition of one or more other characteristics, numbers, steps, operations, constituent elements, components or combinations thereof.

The term "or" in various embodiments of the invention means the inclusion of at least one or all of the disclosed elements. For example, the expression "A or B" may include A, may include B, or may include both A and B.

The expressions such as "first," "second," or the like used in various embodiments of the present invention may modify various component elements in the various embodiments but may not limit corresponding component elements. For example, the above expressions do not limit the sequence and/or importance of the elements. The above expressions are used merely for the purpose of distinguishing an element from the other elements. For example, a first user device and a second user device indicate different user devices although both of them are user devices. For example, without departing from the scope of the present invention, a first component element may be named a second component element. Similarly, the second component element also may be named the first component element.

It should be noted that if it is described that one component element is "coupled" or "connected" to another component element, the first component element may be directly coupled or connected to the second component, and a third component element may be "coupled" or "connected" between the first and second component elements. Conversely, when one component element is "directly coupled" or "directly connected" to another component element, it may be construed that a third component element does not exist between the first component element and the second component element.

The terms in various embodiments of the present invention are used to describe a specific embodiment, and are not intended to limit the present invention. As used herein, the singular forms are intended to include the plural forms as well, unless the context clearly indicates otherwise.

Unless defined differently, all terms used herein, which include technical terminologies or scientific terminologies, have the same meaning as a person skilled in the art to which the present invention belongs. Such terms as those defined in a generally used dictionary are to be interpreted to have the meanings equal to the contextual meanings in the relevant field of art, and are not to be interpreted to have ideal or excessively formal meanings unless clearly defined in the present invention.

An electronic device according to various embodiments of the present invention may be a device with a display function. For example, the electronic device may include at least one of a smart phone, a tablet personal computer (PC), a mobile phone, a video phone, an e-book reader, a desktop PC, a laptop PC, a netbook computer, a personal digital assistant (PDA), a portable multimedia player (PMP), an MP3 player, a mobile medical device, a camera, a wearable device (e.g., a head-mounted-device (HMD) such as electronic glasses, electronic clothes, an electronic bracelet, an electronic necklace, an electronic appcessory, an electronic tattoo, or a smart watch).

According to some embodiments, the electronic device may be a smart home appliance with a display function. The smart home appliances may include at least one of, for example, televisions, digital video disk (DVD) players, audio players, refrigerators, air conditioners, cleaners, ovens, microwaves, washing machines, air purifiers, set-top boxes, TV boxes (e.g., HomeSync^{™} of Samsung, Apple TV^{™}, or Google TV^{™} ), game consoles, electronic dictionaries, electronic keys, camcorders, or electronic frames.

According to some embodiments, the electronic device may include at least one of various medical devices such as a magnetic resonance angiography (MRA) scanner, a magnetic resonance imaging (MRI) scanner, a computed tomography (CT) scanner, a scanner, an ultrasonograph, or the like, a navigation device, a Global Positioning System (GPS) receiver, an Event Data Recoder (EDR), a Flight Data Recoder (FDR), a vehicle infotainment device, an electronic equipment for ship (for example a ship navigation device and gyro-compass and the like, avionics, a security device, a head unit for vehicle, an industrial or household robot, ATM(automatic teller machine) in banking facilities or POS(point of sales) in stores.

According to some embodiments, the electronic device may include at least one of furniture or a part of a building/structure, an electronic board, an electronic signature receiving device, a projector, and various types of measuring devices (for example, a water meter, an electric meter, a gas meter, a radio wave meter and the like) including a display function. An electronic device according to various embodiments of the present invention may be a combination of one or more of above described various devices. Also, an electronic device according to various embodiments of the present invention may be a flexible device. Also, an electronic device according to various embodiments of the present invention is not limited to the above described devices.

Hereinafter, an electronic device according to various embodiments will be described with reference to the accompanying drawings. The term "user" used in various embodiments may refer to a person who uses an electronic device or a device (for example, an artificial intelligence electronic device) that uses an electronic device.

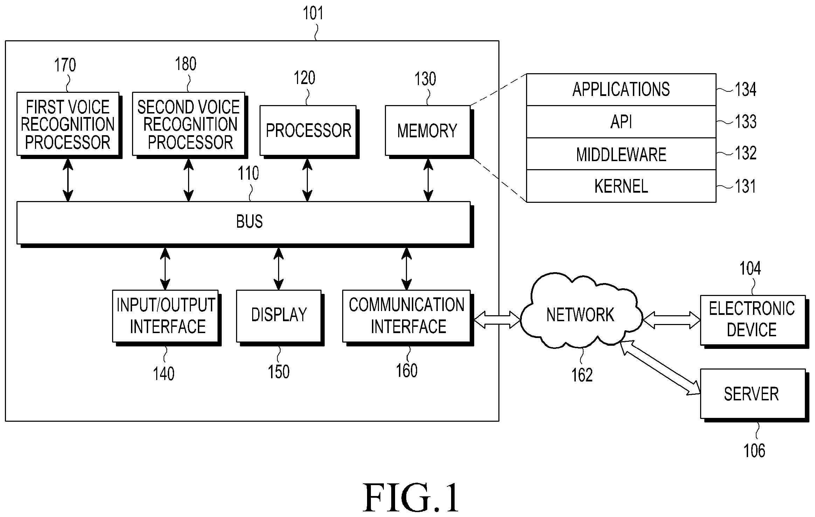

FIG. 1 illustrates a network environment 100 including an electronic device 101 according to various embodiments.

Referring to FIG. 1, the electronic device 101 may include a bus 110, a processor 120, a memory 130, an input/output interface 140, a display 150, a communication interface 160, and includes a first voice recognition processor 170, and a second voice recognition processor 180.

The bus 110 may be a circuit for connecting the above-described elements to each other and transferring communication (for example, control messages) between the elements.

The processor 120 may receive a command from the above-described other elements (for example, the memory 130, the input/output interface 140, the display 150, the communication interface 160, the first voice recognition processor 170, the second voice recognition processor 180, or the like) through, for example, the bus 110, decode the received command, and perform a calculation or data processing according to the decoded command.

The memory 130 may store commands or data received from or generated by the processor 120 or other elements (for example, the input/output interface 140, the display 150, the communication interface 160, the first voice recognition processor 170, the second voice recognition processor 180, or the like). The memory 130 may include programming modules for example, a kernel 131, a middleware 132, an Application Programming Interface (API) 133, applications 134, or the like. Each of the aforementioned programming modules may be formed of software, firmware, hardware, or a combination of at least two thereof.

The kernel 131 may control or manage system resources (for example, the bus 110, the processor 120, the memory 130, and the like) used to perform operations or functions implemented in the remaining programming modules, for example, the middleware 132, the API 133, and the applications 134. Furthermore, the kernel 131 may provide an interface through which the middleware 132, the API 133, and the application 134 may access individual component elements of the electronic device 101 to control or manage them.

The middleware 132 may serve as an intermediary such that the API 133 or the applications 134 communicate with the kernel 131 to transmit/receive data. Further, in relation to requests for an operation received from the applications 134, the middleware 132 may control (for example, scheduling or load-balancing) the requests for the operation by using, for example, a method of determining a sequence for using system resources (for example, the bus 110, the processor 120, the memory 130, or the like) of the electronic device 101 with respect to at least one application among the application 134.

The API 133 is an interface by which the applications 134 control functions provided from the kernel 131 or the middleware 132, and may include, for example, at least one interface or function (for example, commands) for file control, window control, image processing, text control, or the like.

According to the various embodiments, the applications 134 may include a Short Message Service (SMS)/Multimedia Message Service (MMS) application, an e-mail application, a calendar application, an alarm application, a health care application (for example, an application for measuring a work rate or a blood sugar), an environment information application (for example, an application for providing atmospheric pressure, humidity, or temperature information). Additionally or alternately, the application 134 may be an application related to the information exchange between the electronic device 101 and an external electronic device (for example, an electronic device 104). The application related to exchanging information may include, for example, a notification relay application for transferring predetermined information to the external electronic device, or a device management application for managing the external electronic device.

For example, the notification relay application may include a function of transferring notification information generated in other applications (for example, the SMS/MMS application, the e-mail application, the health care application, or the environmental information application) of the electronic device 101 to an external electronic device (for example, the electronic device 104). Additionally or alternately, the notification relay application may, for example, receive notification information from an external electronic device (for example, the electronic device 104), and may provide the received notification information to a user. The device management application may, for example, manage (for example, install, delete, or update) functions for at least a part of an external electronic device (for example, the electronic device 104) communicating with the electronic device 101 (for example, turning on/off the external electronic device itself (or some elements thereof) or adjusting the brightness (or resolution) of a display), applications operating in the external electronic device, or services (for example, a telephone call service or a message service) provided by the external electronic device.

According to various embodiments, the applications 134 may include an application, which is designated according to the property (for example, the type of electronic device) of the external electronic device (for example, the electronic device 104). For example, when an external electronic device is an MP3 player, the applications 134 may include an application relating to the reproduction of music. Similarly, when the external electronic device is a mobile medical device, the application 134 may include an application related to health care. According to an embodiment, the applications 134 may include at least one of applications designated in the electronic device 101 or applications received from an external electronic device (for example, a server 106 or the electronic device 104).

The input/output interface 140 may transfer commands or data input by a user through an input/output device (for example, a sensor, a keyboard, or a touch screen) to the processor 120, the memory 130, the communication interface 160, the first voice recognition processor 170, and a second voice recognition processor 180 through, for example, the bus 110. For example, the input/output interface 140 may provide the processor 120 with data on a user's touch which is input through the touch screen. Further, the input/output interface 140 may output, through the input/output device (for example, a speaker or a display), the commands or data received from the processor 120, the memory 130, the communication interface 160, the first voice recognition processor 170, or the second voice recognition processor 180 through, for example, the bus 110. For example, the input/output interface 140 may output voice data processed by the processor 120 to the user through a speaker.

The display 150 may display various pieces of information (for example, multimedia data or text data) to a user.

The communication interface 160 may connect communication between the electronic device 101 and the external electronic device (for example, the electronic device 104 or the server 106). For example, the communication interface 160 may be connected to a network 162 through wireless or wired communication to communicate with the external device. The wireless communication may include at least one of, for example, Wi-Fi (Wireless Fidelity), BT (Bluetooth), NFC (Near Field Communication), a GPS (Global Positioning System), and cellular communication (for example, LTE, LTE-A, CDMA, WCDMA, UMTS, WiBro, GSM, or the like). The wired communication may include at least one of, for example, a USB (Universal Serial Bus), an HDMI (High Definition Multimedia Interface), Recommended Standard 232 (RS-232), and a POTS (Plain Old Telephone Service).

According to an embodiment, the network 162 may be a telecommunication network. The telecommunication network may include at least one of a computer network, the Internet, the Internet of Things, and a telephone network. According to an embodiment, a protocol (for example, a transport layer protocol, data link layer protocol, or a physical layer protocol) for communication between the electronic device 101 and the external device may be supported in at least one of the applications 134, the application programming interface 133, the middleware 132, the kernel 131, and the communication interface 160.

The first voice recognition processor 170 and/or the second voice recognition processor 180 may process at least some pieces of information acquired from other elements (for example, the processor 120, the memory 130, the input/output interface 140, the communication interface 160, or the like), and may provide the processed information to the user through various methods.

For example, the first voice recognition processor 170 may recognize a first voice received from the input/output interface 140 by using the processor 120 or independently from the processor 120 and determine whether a first command is included in the first voice. According to various embodiments of the present invention, the first command may be preset by a particular word or may be set by the user.

When the first command is included in the first voice, the first voice recognition processor 170 may transfer an additionally received second voice to an external electronic device (for example, the electronic device 104) and thus the external electronic device may perform voice recognition on the second voice.

Further, after the first voice is recognized and it is determined whether the first command is included in the first voice, when the first command is included in the first voice, the second voice recognition processor 180 may recognize the additionally received second voice and determine whether a second command included in a pre-stored voice command set is included in the second voice. According to various embodiments of the present invention, the second command set may include a plurality of words.

When the second command is included in the second voice, the second voice recognition processor 180 may perform an operation corresponding to the second command. According to another embodiment, the second voice recognition processor 180 may transfer a signal for performing the operation corresponding to the second command to the processor 120 and thus the processor 120 may perform the operation.

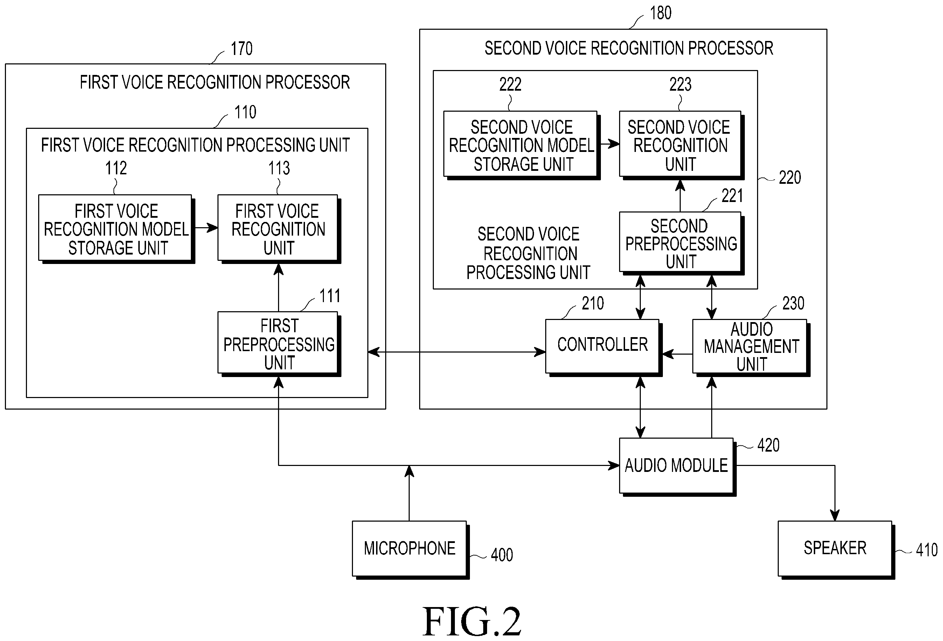

FIG. 2 illustrates a configuration of the first voice recognition processor and the second voice recognition processor according to various embodiments.

Referring to FIG. 2, the electronic device 101 includes the first voice recognition processor 170, the second voice recognition processor 180, a microphone 400, a speaker 410, and an audio module 420.

According to various embodiments, the microphone 400 may receive a voice signal. In the specification, the microphone may be referred to as a voice input unit.

The speaker 410 may include a speaker and output a voice signal. Further, the speaker 410 may output an audio signal generated by execution of an application or a program. In the specification, the speaker may be referred to as an audio output unit.

The audio module 420 may be connected to the first voice recognition processor 170, the second voice recognition processor 180, the microphone 400, and the speaker 410 to perform processing of converting an analog voice signal into a digital voice signal or convert a digital voice signal into an analog voice signal. Further, the audio module 420 may perform a signal processing on the converted digital signal such as an automatic gain control, equalization, or the like. The audio module 420 may transmit/receive a voice signal of an application or a program.

The audio module 420 may be implemented to receive separate power or may be selectively implemented. According to another embodiment, the audio module 420 may be implemented within each of the first voice recognition processor 170 and the second voice recognition processor 180 without receiving separate power.

The first voice recognition processor 170 may include a first voice recognition processing unit 110, and the first voice recognition processing unit 110 may include a first preprocessing unit 111, a first voice recognition model storage unit 112, and a first voice recognition unit 113. In the specification, the voice recognition model storage unit may be referred to as a voice recognition engine storage unit.

The first voice recognition processor 170 corresponds to a low power processor, which operates with low power, and may perform voice recognition by using a first voice recognition model. The first voice recognition processor 170 may include the first voice recognition processing unit 110 including the first preprocessing unit 111, the first voice recognition model storage unit 112, and the first voice recognition unit 113.

Before the first voice recognition unit 113 performs the voice recognition, the first preprocessing unit 111 may modify a voice signal input from the microphone 400 and output the modified voice signal to the first voice recognition unit 113. The first preprocessing unit 111 may be selectively implemented or may be omitted according to an implementation.

The first voice recognition model storage unit 112 may store a first voice recognition model including various voice recognition algorithms used for voice recognition, and may be generated or updated by voice recognition training.

According to various embodiments of the present invention, the first voice recognition model may include a first level voice recognition algorithm which can recognize a first level voice including a preset command such as a particular word or a combination of one or more words. For example, the first voice recognition model may be a speaker recognition algorithm.

The first voice recognition unit 113 may recognize a voice by using the first voice recognition model. According to various embodiments of the present invention, the first voice recognition unit 113 may recognize the first level voice in the first voice recognition processor 170 that operates with low power. For example, the first voice recognition unit 113 may recognize a command including a combination of predetermined words of "Hi, Galaxy".

Further, the second voice recognition processor 180 may include a second voice recognition processing unit 220, and a controller 210, an audio management unit 230, and the second voice recognition processing unit 220 may include a second voice recognition model storage unit 222 and a second voice recognition unit 223. In the specification, the audio management unit may be referred to as a voice management unit.

The second voice recognition processor 180 may include the controller 210, the second voice recognition processing unit 220, and the audio management unit 230. According to various embodiments of the present invention, the second voice recognition processor 180 may further include a third voice recognition processing unit including a third preprocessing unit, a third storage unit, and a third voice recognition unit. Here, the second voice recognition processor 180 operates with different power from that of the first voice recognition processor 170.

The controller 210 controls the general operation of the first voice recognition processor 170 or/and the second voice recognition processor 180 such as a voice recognition control, a signal control between respective elements, and the like. Further, the controller 210 may be connected to the audio management unit 230 to receive a voice input/output signal. The controller 210 may control operations of the first voice recognition processing unit 110 and the second voice recognition processing unit 220 by using application and program information, and information received from the audio management unit 230. According to an embodiment of the present invention, although it has been described that the controller 210 is included in the second voice recognition processor 180, the present invention is not limited thereto and the controller 210 may be included in the first voice recognition processor 170 or may be configured separately from the first voice recognition processor 170 and the second voice recognition processor 180. Also, according to various embodiments of the present invention, the first voice recognition processor 170 or/and the second voice recognition processor 180 may control each operation.

The second voice recognition processing unit 220 may include the second preprocessing unit 221, the second voice recognition model storage unit 222, and the second voice recognition unit 223.

Before the second voice recognition unit 223 performs the voice recognition, the second preprocessing unit 221 may modify a voice signal input from the microphone 400 and output the modified voice signal to the second voice recognition unit 223. The second preprocessing unit 221 may be selectively implemented or may be omitted according to an implementation.

The second voice recognition model storage unit 222 stores a second voice recognition model used for the voice recognition by the second voice recognition unit 223.

According to various embodiments of the present invention, the second voice recognition model may include a second level voice recognition algorithm, which can recognize not only the first level voice, which can be recognized by the first voice recognition model, but also a second level voice including a command of one word. The second level voice recognition algorithm may recognize more commands than the first level voice recognition algorithm. Further, the second voice recognition model may be generated or updated by voice recognition training.

The second voice recognition unit 223 may recognize the second level voice by using the second voice recognition model. The second voice recognition unit 223 may perform voice recognition with higher performance than the first voice recognition unit 113. For example, the second voice recognition unit 223 may recognize a command including at least one word such as "Play", "Stop", "Pause", or the like.

The audio management unit 230 is directly or indirectly connected to the microphone 400 and the speaker 410 to manage an input or output of the voice signal. Further, the audio management unit 230 may transfer the voice signal output from the audio module 420 to the second preprocessing unit 221. The audio management unit 230 may manage an input/output of the audio signal of the application or program and determine whether the audio signal is output from the speaker 410.

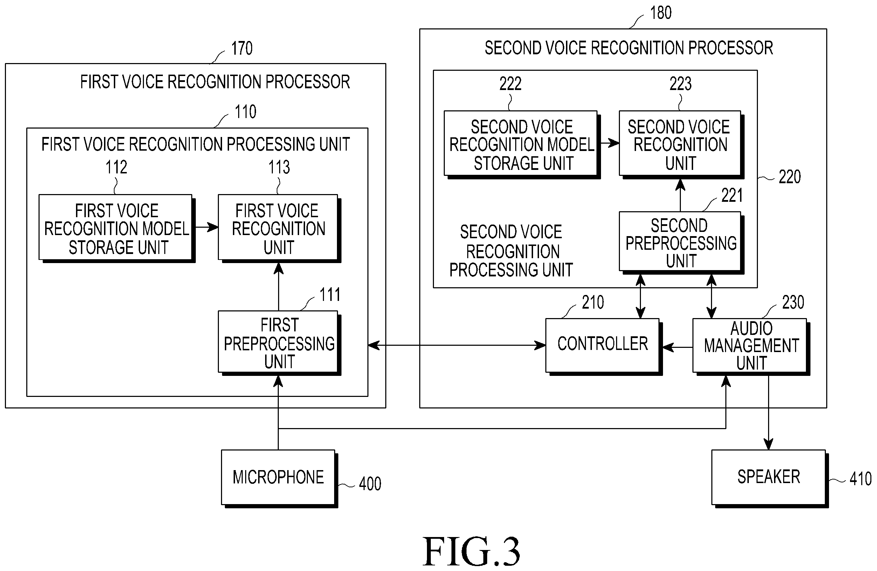

FIG. 3 illustrates a configuration of the first voice recognition processor and the second voice recognition processor according to various embodiments.

According to various embodiments of the present invention, the electronic device 101 may be implemented such that the audio module is omitted and included within the first voice recognition processor 170 and the second voice recognition processor 180. The elements of the electronic device 101 may be executed equally to the description of FIG. 2.

According to FIG. 3, the controller 210 may receive the voice signal input from the microphone 400 through the audio management unit 230. The audio management unit 230 may receive the voice signal from the microphone 400 and transfer the voice signal to the speaker 410, and thus the voice may be output through the speaker 410.

The second voice recognition unit 223 may recognize a voice by using the first voice recognition model of the first voice recognition processor 170. Further, the first voice recognition unit 113 and/or the second voice recognition unit 223 may perform the voice recognition to recognize a particular speech of a particular speaker.

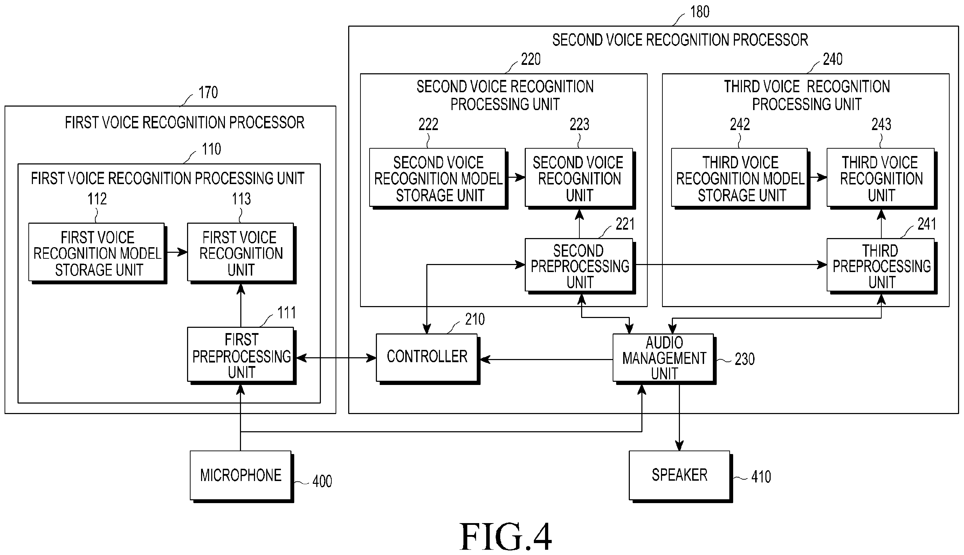

FIG. 4 illustrates a configuration of the first voice recognition processor and the second voice recognition processor according to various embodiments.

According to various embodiments of the present invention, the electronic device may include the second voice recognition processor 180 including two voice recognition processing units.

The second voice recognition processor 180 may include the second voice recognition processing unit 220 and a third voice recognition processing unit 240. The second voice recognition model of the second voice recognition processing unit 220 and a third voice recognition model of the third voice recognition processing unit 240 may include different voice recognition algorithms. The third voice recognition model may include a third level voice recognition algorithm for recognizing a command of a combination of a plurality of words. For example, the third level voice may be a phrase or/and a sentence of a combination of a plurality of words such as "open camera". According to various embodiments, one of the second voice recognition model and the third voice recognition model may be the same recognition model as the first voice recognition model.

The third voice recognition processing unit 240 may include a third preprocessing unit 241, a third voice recognition model storage unit 242, and a third voice recognition unit 243.

Before the third voice recognition unit 243 performs the voice recognition, the third preprocessing unit 241 may modify a voice signal input from the microphone 400 and output the modified voice signal to the third voice recognition unit 243. The third preprocessing unit 241 may be selectively implemented or may be omitted according to an implementation.

The third voice recognition model storage unit 242 stores a third voice recognition model used for the voice recognition by the third voice recognition unit 243. According to various embodiments of the present invention, the third voice recognition model may include a third level voice recognition algorithm which can recognize a third level voice including a phrase or/and a sentence of a combination of a plurality of words. The third level voice recognition algorithm may recognize more commands than the second level voice recognition algorithm. For example, the third level voice recognition algorithm may be a natural language recognition algorithm, and an algorithm for recognizing a command of a combination of a plurality of words such as "open camera".

The third voice recognition unit 243 may recognize the third level voice by using the third voice recognition model.

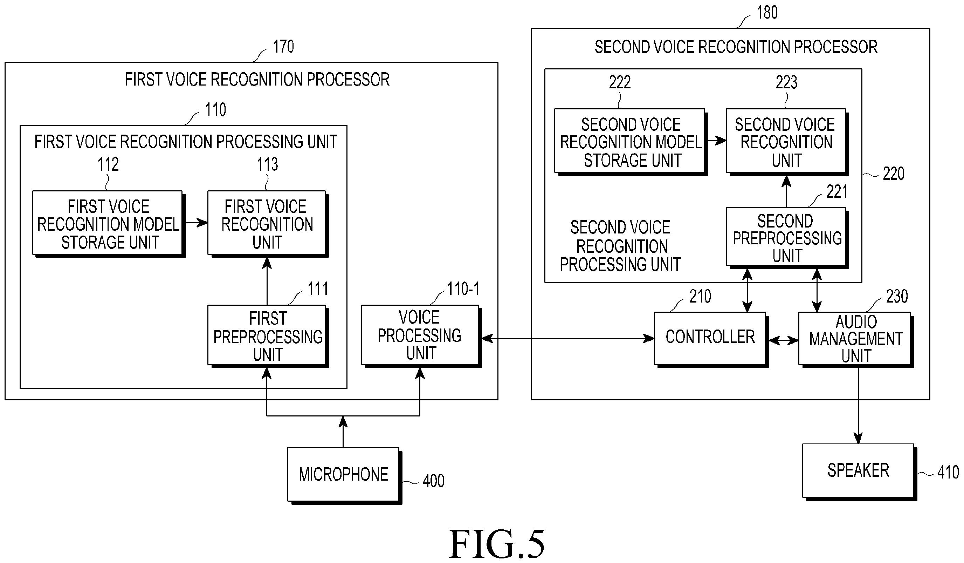

FIG. 5 illustrates a configuration of the first voice recognition processor and the second voice recognition processor according to various embodiments.

According to various embodiments, in the electronic device 101, the first voice recognition processor 170 may further include a voice processing unit 150, and the voice signal input from the microphone 400 may be transferred to the voice processing unit 150. According to various embodiments of the present invention, the first voice recognition processor 170 may operate as an audio module.

The voice processing unit 120 may convert a voice signal input from the microphone 400, that is, an analog signal into a digital signal and output the digital signal, or perform voice processing such as an Automatic Gain Control (AGC). The voice signal processed by the voice processing unit 120 may be transferred to the second voice recognition processing unit 220 through the audio management unit 230 of the second voice recognition processor 180 or used by an application or program.

The first voice recognition unit 113 may recognize a voice by using the first voice recognition model. The first voice recognition model may include a first level voice recognition algorithm, and may be a recognition model for recognizing a voice input or trained by the user.

When an application is executed, the second voice recognition unit 223 may recognize a voice by using the second voice recognition model specialized for the executed application. For example, the second voice recognition model may be a word recognition model, which can recognize several words, or a large vocabulary speech recognition model.

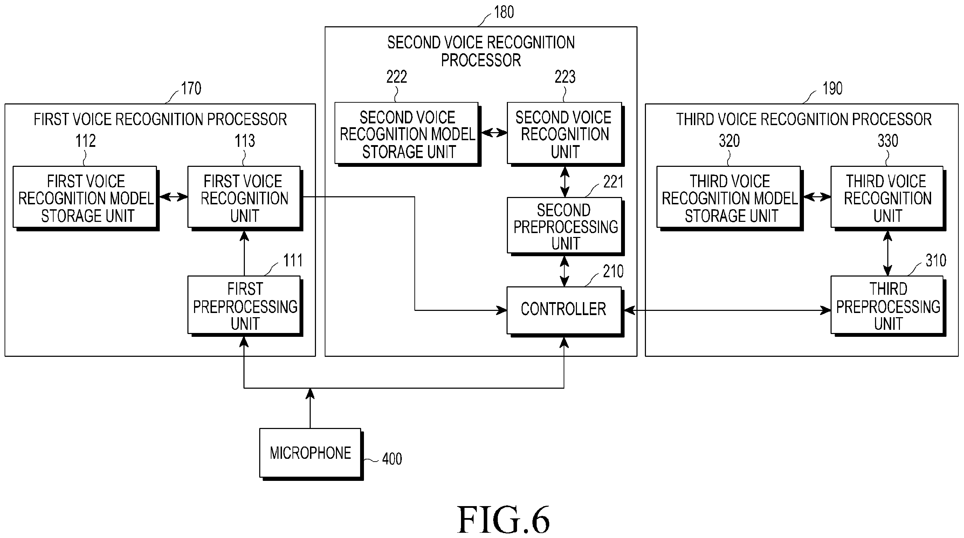

FIG. 6 illustrates a configuration of the first voice recognition processor, the second voice recognition processor, and a third voice recognition processor according to illustrative examples not forming part of the invention

According to various examples, the electronic device 101 may include the first voice recognition processor 170 and the second voice recognition processor 180, and the external electronic device 140 may include a third voice recognition processor 190.

The first voice recognition processor 170 may include the first preprocessing unit 111, the first voice recognition model storage unit 112, and the first voice recognition unit 113.

When the voice signal is received from the microphone 400, the first preprocessing unit 111 modifies the received first voice and transfers the modified first voice to the first voice recognition unit 113.

The first voice recognition model storage unit 112 may store the first voice recognition model including the first level voice recognition algorithm which can recognize the first level voice.

The first voice recognition unit 113 may recognize the first voice by using the first voice recognition model and determine whether the recognized first voice includes a first command. When it is determined that the first voice includes the first command, the first voice recognition unit 113 may transfer an input second voice to the third voice recognition module 190. Further, when it is determined that the first voice does not include the first command, the first voice recognition unit 113 terminates the voice recognition.

The second voice recognition processor 180 may include the controller 210, the second preprocessing unit 221, the second voice recognition model storage unit 222, and the second voice recognition unit 223.

The controller 210 controls the general operation of the first voice recognition processor 170 or/and the second voice recognition processor 180 such as a voice recognition control, a signal control between respective elements, and the like. According to various examples, when the first voice is received, the controller 210 may transfer the first voice to the second preprocessing unit 221. When a result of the voice recognition is received by the second voice recognition unit 223, the controller 210 may perform an operation corresponding to a result of the voice recognition.

According to various examples, although it has been described that the controller 210 is included in the second voice recognition processor 180, the controller 210 may be included in the first voice recognition processor 170 or may be configured separately from the first voice recognition processor 170 and the second voice recognition processor 180. Also, the first voice recognition processor 170 or/and the second voice recognition processor 180 may control each operation.

Before the second voice recognition unit 223 performs the voice recognition, the second preprocessing unit 221 may modify a voice signal and output the modified voice signal to the second voice recognition unit 223. The second preprocessing unit 221 may be selectively implemented or may be omitted according to an implementation.

The second voice recognition model storage unit 222 may store the second voice recognition model including the second level voice recognition algorithm which can recognize the second level voice. According to various examples, the second level voice may include the first level voice.

The second voice recognition unit 223 may recognize the first voice by using the second voice recognition model and determine whether the recognized first voice includes a first command. When it is determined that the first voice includes the first command, the second voice recognition unit 223 may recognize an input second voice and determine whether the recognized second voice includes a second command. When it is determined that the first voice does not include the first command, the second voice recognition unit 223 terminates the voice recognition.

Further, when it is determined that the second voice includes the second command, the second voice recognition unit 223 may transfer a result of the voice recognition to the controller 210, and the controller 210 may perform an operation corresponding to the second command. When it is determined that the second voice does not include the second command, the second voice recognition unit 223 terminates the voice recognition.

The third voice recognition processing unit 190 may include the third preprocessing unit 310, the third voice recognition model storage unit 320, and the third voice recognition unit 330.

Before the third voice recognition unit 330 performs the voice recognition, the third preprocessing unit 310 may modify a voice signal and output the modified voice signal to the third voice recognition unit 330. The third preprocessing unit 310 may be selectively implemented or may be omitted according to an implementation.

The third voice recognition model storage unit 320 may store the third voice recognition model including the third level voice recognition algorithm which can recognize the third level voice.

The third voice recognition unit 330 may recognize the second voice by using the third voice recognition model and determine whether the recognized second voice includes a second command or/and a third command. When it is determined that the second voice includes the second command or/and the third command, the third voice recognition unit 330 may transfer a result of the voice recognition to the second voice recognition processor 180. When it is determined that the second voice does not include the second command or/and the third command, the third voice recognition unit 330 terminates the voice recognition.

Thereafter, the second voice recognition processor 180 may perform an operation corresponding to the second command or/and the third command.

According to various examples, the electronic device may include at least one of a first voice recognition device and a second voice recognition device, which acquires a first voice, wherein an additionally recognized second voice is recognized through an external electronic device when a first voice acquired by the first voice recognition device includes a predetermined command, and an additionally recognized second voice is recognized and then a related operation is performed based on the recognized second voice when a first voice acquired by the second voice recognition device includes a predetermined command.

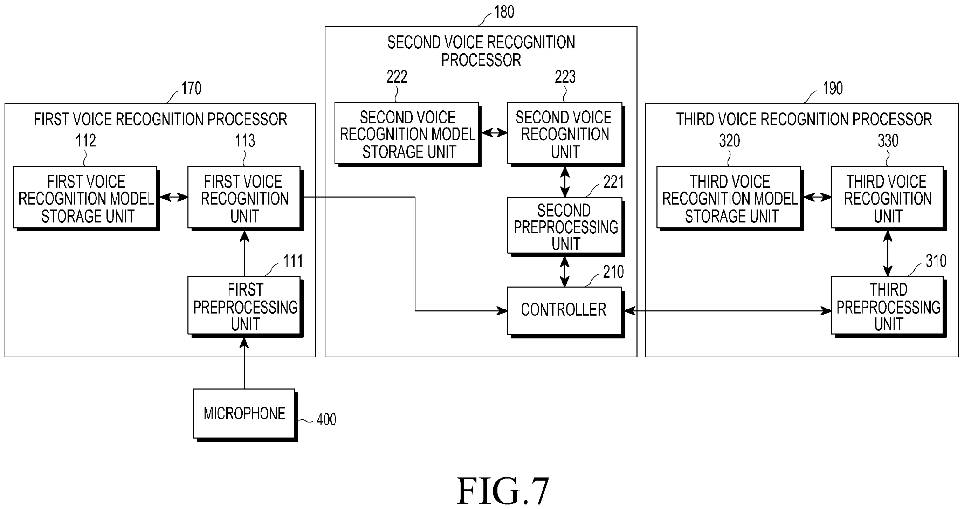

FIG. 7 illustrates a configuration of the first voice recognition processor, the second voice recognition processor, and the third voice recognition processor according to illustrative examples not forming part of the invention.

According to various examples, the electronic device may include the first voice recognition processor 170 and the second voice recognition processor 180, and the external electronic device 140 may include the third voice recognition processor 190.

The first voice recognition processor 170 may include the first preprocessing unit 111, the first voice recognition model storage unit 112, and the first voice recognition unit 113.

When the voice signal is received from the microphone 400, the first preprocessing unit 111 modifies the received first voice and transfer the modified first voice to the first voice recognition unit 113.

The first voice recognition model storage unit 112 may store the first voice recognition model including the first level voice recognition algorithm which can recognize the first level voice.

The first voice recognition unit 113 may recognize the first voice by using the first voice recognition model and determine whether the recognized first voice includes a first command. When it is determined that the first voice includes the first command, the first voice recognition unit 113 may transfer an input second voice to the third voice recognition module 190. When it is determined that the first voice does not include the first command, the first voice recognition unit 113 may transfer the first voice to the second voice recognition processor 180.

The second voice recognition processor 180 may include the controller 210, the second preprocessing unit 221, the second voice recognition model storage unit 222, and the second voice recognition unit 223.

When the first voice is received, the controller 210 may transfer the first voice to the second preprocessing unit 221. When a result of the voice recognition is received by the second voice recognition unit 223, the controller 210 may perform an operation corresponding to a result of the voice recognition.

Before the second voice recognition unit 223 performs the voice recognition, the second preprocessing unit 221 may modify a voice signal and output the modified voice signal to the second voice recognition unit 223. The second preprocessing unit 221 may be selectively implemented or may be omitted according to an implementation.

The second voice recognition model storage unit 222 may store the second voice recognition model including the second level voice recognition algorithm which can recognize the second level voice.

The second voice recognition unit 223 may recognize the first voice by using the second voice recognition model and determine whether the recognized first voice includes a first command. When it is determined that the first voice includes the first command, the second voice recognition unit 223 may recognize an input second voice and determine whether the recognized second voice includes a second command. When it is determined that the first voice does not include the first command, the second voice recognition unit 223 terminates the voice recognition.

Further, when it is determined that the second voice includes the second command, the second voice recognition unit 223 may transfer a result of the voice recognition to the controller 210, and the controller 210 may perform an operation corresponding to the second command. When it is determined that the second voice does not include the second command, the second voice recognition unit 223 terminates the voice recognition.

According to various examples, when it is determined that the first voice does not include the first command, the second voice recognition unit 223 may determine whether the first voice includes the second command. When it is determined that the first voice includes the second command, the second voice recognition unit 223 may transfer a result of the voice recognition to the controller 210.

The third voice recognition processing unit 190 may include the third preprocessing unit 310, the third voice recognition model storage unit 320, and the third voice recognition unit 330.

Before the third voice recognition unit 330 performs the voice recognition, the third preprocessing unit 310 may modify a voice signal and output the modified voice signal to the third voice recognition unit 330. The third preprocessing unit 310 may be selectively implemented or may be omitted according to an implementation.

The third voice recognition model storage unit 320 may store the third voice recognition model including the third level voice recognition algorithm which can recognize the third level voice.

The third voice recognition unit 330 may recognize the second voice by using the third voice recognition model and determine whether the recognized second voice includes a second command or/and a third command. When it is determined that the second voice includes the second command or/and the third command, the third voice recognition unit 330 may transfer a result of the voice recognition to the second voice recognition processor 180. When it is determined that the second voice does not include the second command or/and the third command, the third voice recognition unit 330 terminates the voice recognition.

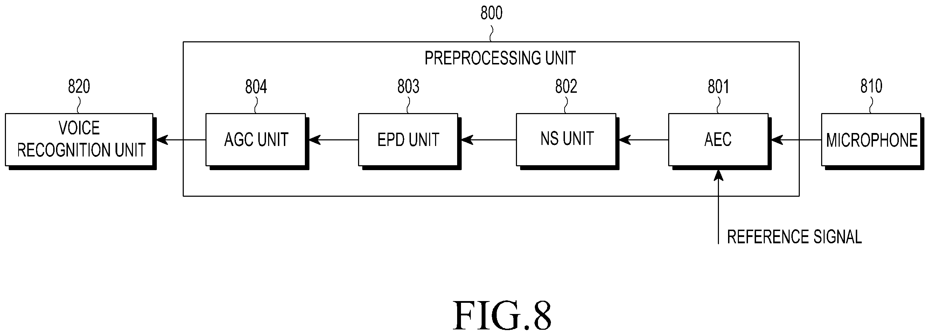

FIG. 8 illustrates a configuration of a preprocessing unit according to illustrative examples not forming part of the invention;

A preprocessing unit 800 may include an Adaptive Echo Canceller (AEC) 801, a Noise Suppression (NS) unit 802, an End-Point Detection (EPD) unit 803, an Automatic Gain Control (AGC) unit 804.

The adaptive echo canceller 801 performs an operation of removing an echo from a voice signal input from a microphone 510 based on a reference signal. For example, if a voice signal is input when an application of outputting a sound, such as a phone call, a ringtone, a music player, a camera, or the like is executed by the second voice recognition processor 200, the adaptive echo canceller 801 may remove an echo, which is input by the execution of the application, from the input voice signal and transfer the voice signal to a voice recognition unit 820.

The noise suppression unit 802 performs an operation of suppressing noise from the input voice signal.

The end-point detection unit 803 performs an operation of detecting an end point of the voice to find a part where the voice actually exists in the input voice signal.

The automatic gain control unit 804 performs an operation of automatically receiving a good voice signal even though a propagation intensity of the input voice signal is changed.

The elements may not be included in the first preprocessing unit 111 in order to operate with low power and all the elements may be included in the second preprocessing unit 221 in order to increase the performance of the voice recognition. However, it is not limited thereto in embodiments of the present invention and the elements may be included or excluded in various ways.

According to the present invention, the first voice recognition processor 170 is implemented as a low power processor. Even when the second voice recognition processor 200 is in an idle mode, the first voice recognition processor 170 may wait for an input of the voice signal. Here, the idle mode refers to a state where power is not supplied, wherein the screen of the electronic device 101 is turned off and only necessary elements operate through the supply of minimum power.

When the voice is input from the microphone 130, the first voice recognition unit 113 of the first voice recognition processor 100 recognizes the input voice. When the input voice includes a command to activate the second voice recognition processor 180, the first voice recognition unit 113 transfers a signal for activating the second voice recognition processor 180 to the controller 210. Thereafter, the controller 210 may perform the voice recognition by activating the second voice recognition processing unit 220.

Even when the second processor 200 is in an active state, the controller 210 may perform the voice recognition through the first voice recognition processor 170. At this time, the controller 210 may control the operation of the first voice recognition processor 170 by using application information and information received from the audio management unit 230 or control the operation of the first voice recognition processing unit 110 and the second voice recognition processing unit 220.

According to various embodiments of the present invention, when the voice is received, the electronic device 101 may perform the voice recognition by the first voice recognition processor 170, stop the voice recognition of the first voice recognition processor 170 based on the operation of the audio processing unit, which processes the audio signal, such as the audio module, the speaker, the audio management unit, and the like, and perform the voice recognition by the second voice recognition processor 180.

According to the present invention, according to whether the audio signal is output from the speaker, the voice recognition is performed by one processor selected from the processor operating with low power and the high performance processor.

For example, when an application or a program for outputting a sound is executed, if a voice signal for voice recognition is input, a sound output from the speaker becomes an echo and flows into the microphone and, accordingly, an input voice signal is distorted, so that the voice recognition can be performed through the high performance processor.

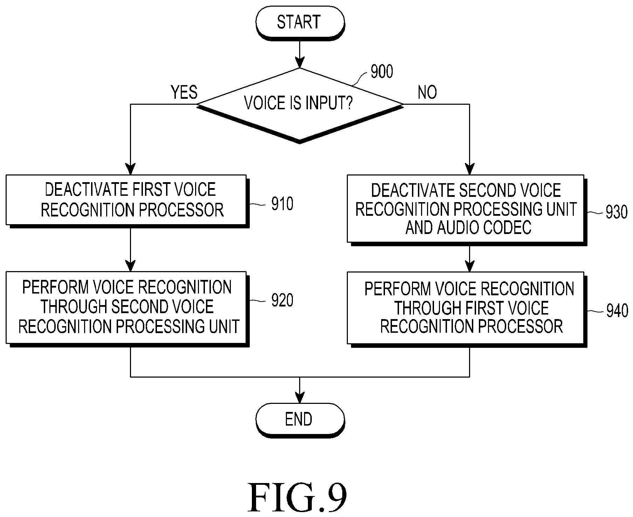

FIG. 9 is a flowchart illustrating a process in which a controller performs voice recognition through the first voice recognition processor or the second voice recognition processor according to illustrative examples not forming part of the invention.

When a voice is input in step 900, the controller 210 deactivates the first voice recognition processor 170 in step 910. When the voice is not input, the controller 210 may proceed to step 930. Here, the deactivation refers to an operation of stopping the supply of power to the first voice recognition processing unit 110 and stopping the voice recognition of the first voice recognition processing unit 110 within the first voice recognition processor 170. According to various examples, the controller 210 controls the audio management unit 230 to determine whether the voice is output from the speaker 410.

The controller 210 having proceeded to step 920 from step 910 performs the voice recognition through the second voice recognition processing unit 220 of the second voice recognition processor 180.

In step 930, the controller 210 deactivates states of the second voice recognition processing unit 220 of the second voice recognition processor 180 and the audio module 420. In other words, the controller 210 stops the supply of power to the second voice recognition processing unit 220 and the audio module 420 to switch them to an idle state. That is, the controller 210 may stop a voice recognition operation in the second voice recognition processing unit 220 and the audio module 420.

In step 940, the controller 210 may perform the voice recognition through the first voice recognition processor 170.

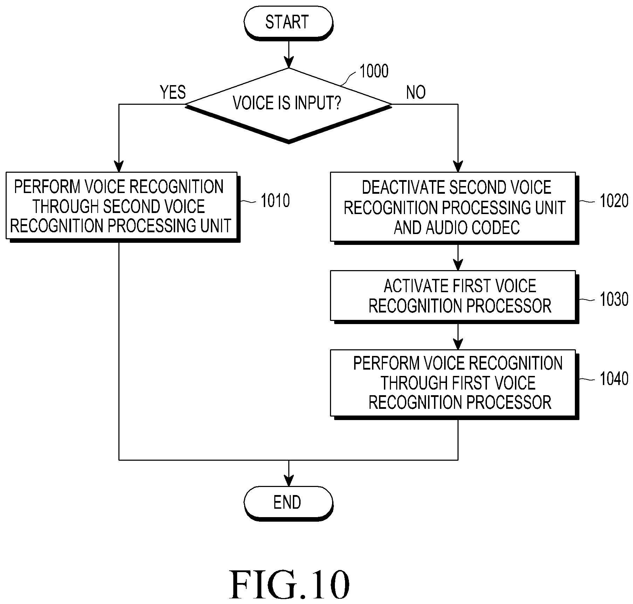

FIG. 10 is a flowchart illustrating a process in which the controller performs voice recognition through the first voice recognition processor or the second voice recognition processor according to illustrative examples not forming part of the invention.

According to various examples, the controller 210 determines whether a voice is input in step 1000. The controller 210 proceeds to step 1010 when the voice is input, and proceeds to step 720 when the voice is not input.

In step 1010, the controller 210 may perform the voice recognition through the second voice recognition processing unit 220.

The controller 210 deactivates the second voice recognition processing unit 220 in step 1020, and activates the first voice recognition processor 170 in step 730. According to various examples, the activation refers to switching a state of the first voice recognition processor 170 to a state where the voice recognition operation can be performed, by supplying power to the first voice recognition processor 170 in the idle state. In other words, the activation refers to a state where the first voice recognition processing unit 110 of the first voice recognition processor 170 can perform the voice recognition operation.

In step 1040, the controller 210 may perform the voice recognition through the first voice recognition processor 170.

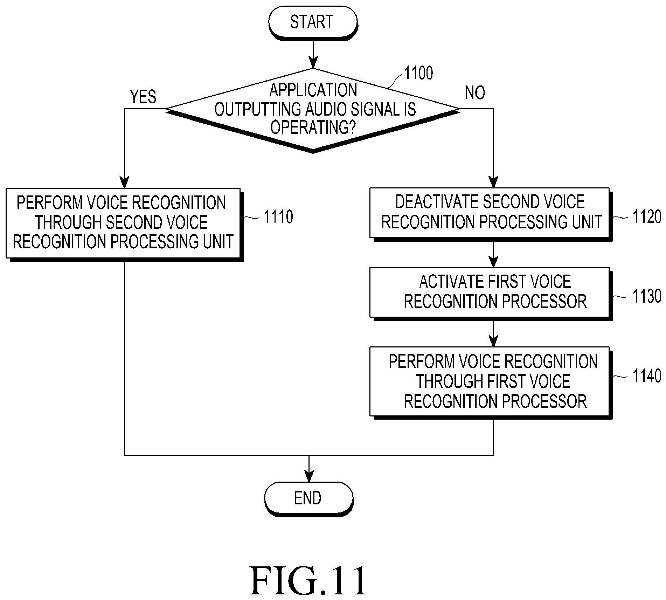

FIG. 11 is a flowchart illustrating a process in which the controller performs voice recognition through the first voice recognition processor or the second voice recognition processor according to various embodiments.

According to various embodiments of the present invention, the controller 210 determines whether an application, which outputs an audio signal, is being executed. The controller 210 proceeds to step 1110 when the application, which outputs the audio signal, is being executed, and proceeds to step 1120 when the application, which outputs the audio signal, is not being executed. Here, when the application, which outputs the audio signal, is being executed, the controller 210 may determine that a sound is output through the speaker.

In step 1110, the controller 210 performs the voice recognition through the second voice recognition processor 220.

The controller 210 deactivates the second voice recognition processing unit 220 in step 1120, and activates the first voice recognition processor 170 in step 1130.

In step 1140, the controller 210 performs the voice recognition through the activated first voice recognition processor 170.

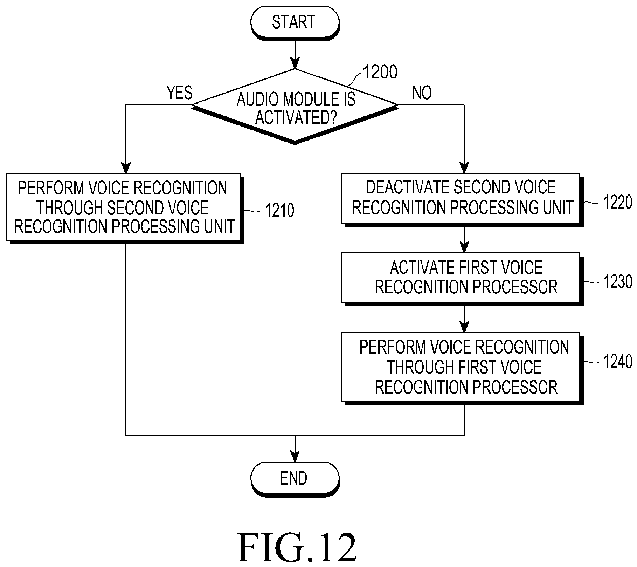

FIG. 12 is a flowchart illustrating a process in which a controller performs voice recognition through the first voice recognition processor or the second voice recognition processor according to various embodiments.

According to various embodiments of the present invention, the controller 210 determines whether the audio module 420 is activated in step 1200. The controller 210 proceeds to step 1210 when the audio module 420 is activated, and proceeds to step 1220 when the audio module 420 is not activated. Here, the activation of the audio module 420 may refer to a state where the audio module 420 operates.

In step 1210, the controller 210 performs the voice recognition through the second voice recognition processor 220.

The controller 210 deactivates the second voice recognition processing unit 220 in step 1220, and activates the first voice recognition processor 100 in step 1230.

In step 1240, the controller 210 performs the voice recognition through the first voice recognition processor 170.

For example, when a voice of "Hi Galaxy" is predetermined as a wake-up command for the activation, the controller 210 may activate a particular voice recognition processor if the voice of "Hi Galaxy" is received from the microphone 400. Thereafter, the controller 210 may perform additional voice recognition by using the activated voice recognition processor, or stop or start the operation of the particular voice recognition processor. The voice may be recognized by the first voice recognition unit 110 of the first voice recognition processor 170 or the second voice recognition unit 220 of the second voice recognition processor 180.

Further, when an application or a program, which reproduces music, is executed, if an audio signal output from the speaker 410 becomes an echo and flows into the microphone, a voice input signal input into the microphone 400 may be distorted. Basically, the controller 210, which performs the voice recognition through the first voice recognition processor 170, may determine whether the audio signal is output through the speaker 410 and, when the audio signal is output through the speaker 410, deactivate the first voice recognition processor 170 and activate the second voice recognition processor 220 According to various embodiments of the present invention, the controller 210 may determine whether the audio signal is output through the speaker 410 to determine whether the music reproduction application operates or the audio module 420 is activated.

Thereafter, the second preprocessing unit 221 performs signal processing such as an AEC or the like for suppressing distortion of the input voice and transfer the refined voice to the second voice recognition unit 223.

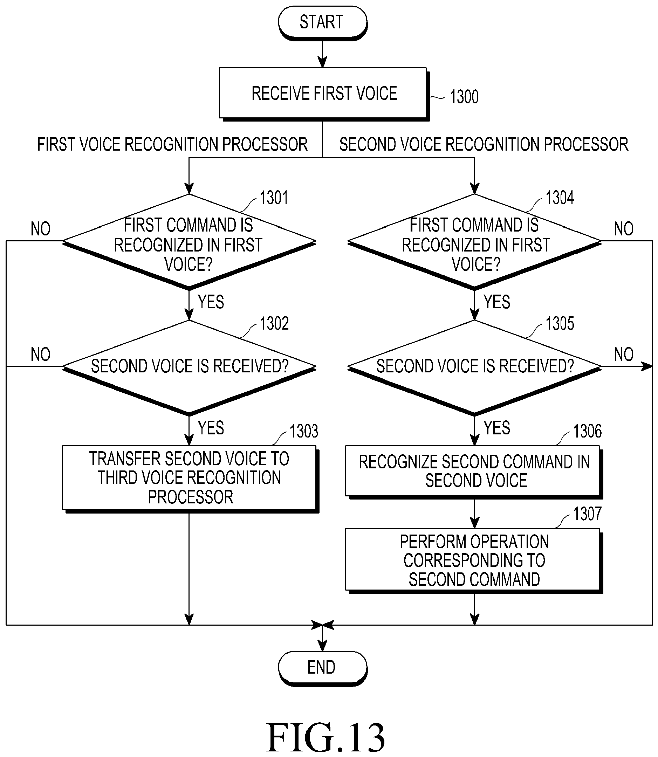

FIG. 13 illustrates a process of performing voice recognition through the first voice recognition processor, the second voice recognition processor, and the third voice recognition processor according to illustrative examples not forming part of the invention.

In step 1300, the first voice recognition processor 170 and the second voice recognition processor 180 may receive a first voice from the microphone 400.

The first voice recognition processor 170 recognizes the first voice and determines whether the first voice includes a first command in step 1301. The first voice recognition processor 170 proceeds to step 1302 when the first voice includes the first command, and terminates the voice recognition when the first voice does not include the first command.

The first voice recognition processor 170 determines whether a second voice is received in step 1302. The first voice recognition processor 170 proceeds to step 1303 when the second voice is received, and terminates the voice recognition when the second voice is not received.

In step 1303, the first voice recognition processor 170 may transfer the received second voice to the third voice recognition processor 190 and then terminate the voice recognition. Accordingly, after receiving and recognizing the second voice, the third voice recognition processor 190 may transfer a result of the recognition to the first voice recognition processor 170 or the second voice recognition processor 180, and the first voice recognition processor 170 or the second voice recognition processor 180 may perform an operation corresponding to the recognition result.

The second voice recognition processor 180 recognizes the first voice and determines whether the first voice includes the first command in step 1304. The second voice recognition processor 180 proceeds to step 1305 when the first voice includes the first command, and terminates the voice recognition when the first voice does not include the first command.

The second voice recognition processor 180 determines whether a second voice is received in step 1305. The second voice recognition processor 180 proceeds to step 1306 when the second voice is received, and terminates the voice recognition when the second voice is not received.

The second voice recognition processor 180 recognizes the received second voice in step 1306 and, when the second voice includes the second command, proceeds to step 1307 and performs an operation corresponding to the second command.

A method using an electronic device may include: an operation of acquiring a first voice by at least one of a first voice recognition device and a second voice recognition device; an operation of, when the first voice acquired by the first voice recognition device includes a predetermined command, recognizing an additionally recognized second voice through an external electronic device; an operation of, when the first voice acquired by the second voice recognition device includes a predetermined command, recognizing an additionally recognized second voice; and an operation of performing a related operation based on the recognized second voice.

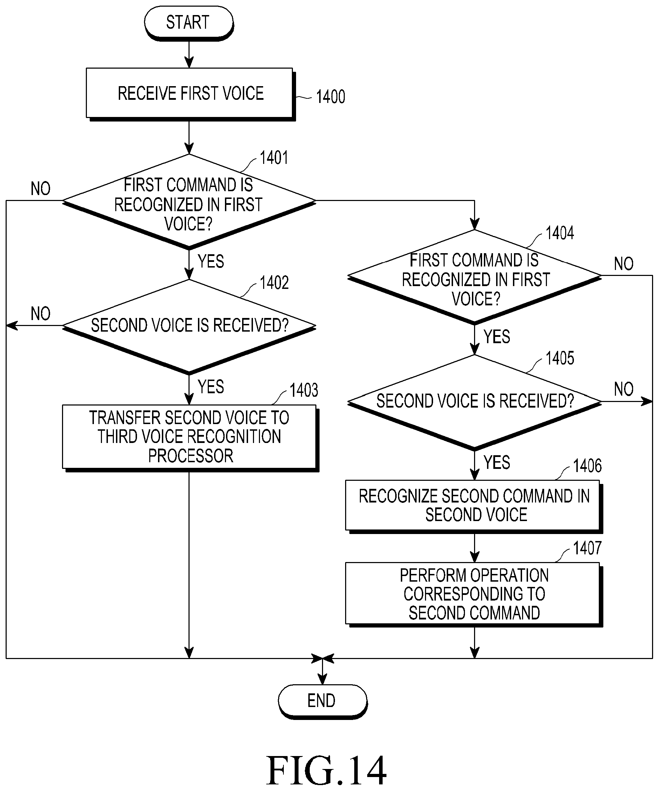

FIG. 14 illustrates a process of performing voice recognition through the first voice recognition processor, the second voice recognition processor, and the third voice recognition processor according to illustrative examples not forming part of the invention.

In step 1400, the first voice recognition processor 170 may receive a first voice from the microphone 400.

The first voice recognition processor 170 recognizes the first voice and determines whether the first voice includes a first command in step 1401. The first voice recognition processor 170 proceeds to step 1402 when the first voice includes the first command, and terminates the voice recognition when the first voice does not include the first command.

The first voice recognition processor 170 determines whether a second voice is received in step 1402. The first voice recognition processor 170 proceeds to step 1303 when the second voice is received, and terminates the voice recognition when the second voice is not received.

In step 1403, the first voice recognition processor 170 may transfer the received second voice to the third voice recognition processor 190 and then terminate the voice recognition. Accordingly, after receiving and recognizing the second voice, the third voice recognition processor 190 may transfer a result of the recognition to the first voice recognition processor 170 or the second voice recognition processor 180, and the first voice recognition processor 170 or the second voice recognition processor 180 may perform an operation corresponding to the recognition result.

The second voice recognition processor 180 recognizes the first voice and determines whether the first voice includes the first command in step 1404. The second voice recognition processor 180 proceeds to step 1405 when the first voice includes the first command, and terminates the voice recognition when the first voice does not include the first command.

The second voice recognition processor 180 determines whether a second voice is received in step 1405. The second voice recognition processor 180 proceeds to step 1406 when the second voice is received, and terminates the voice recognition when the second voice is not received.

The second voice recognition processor 180 recognizes the received second voice in step 1406 and, when the second voice includes the second command, proceeds to step 1407 and performs an operation corresponding to the second command.

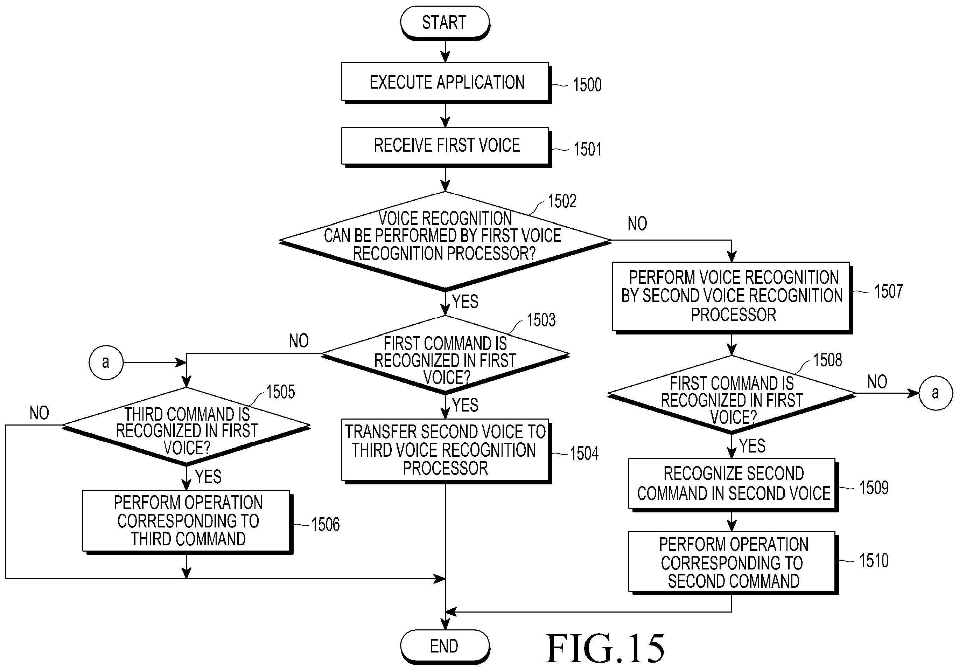

FIG. 15 illustrates a process of performing voice recognition through the first voice recognition processor, the second voice recognition processor, and the third voice recognition processor according to illustrative examples not forming part of the invention.

In step 1500, the first voice recognition processor 170 may execute a particular application.

In step 1501, the first voice recognition processor 170 may receive a first voice from the microphone 400.

The first voice recognition processor 170 may determine whether the voice recognition can be performed on the executed application in step 1502, The first voice recognition processor 170 may proceed to step 1503 when the voice recognition can be performed, and proceed to step 1507 when the voice recognition cannot be performed.

The first voice recognition processor 170 recognizes the first voice and determines whether the first voice includes a first command in step 1503. The first voice recognition processor 170 may proceed to step 1504 when the first voice includes the first command, and proceed to step 1505 when the first voice does not include the first command.

In step 1504, when a second voice is received, the first voice recognition processor 170 may transfer the received second voice to the third voice recognition processor 190.

The first voice recognition processor 170 recognizes the first voice and determines whether the first voice includes a third command in step 1505. The first voice recognition processor 170 proceeds to step 1506 when the first voice includes the third command, and terminates the voice recognition when the first voice does not include the third command.

In step 1506, the first voice recognition processor 170 may perform an operation corresponding to the third command.

In step 1507, the second voice recognition processor 180 may perform the voice recognition on the executed application.

The second voice recognition processor 180 recognizes the first voice and determines whether the first voice includes the first command in step 1508. The second voice recognition processor 180 proceeds to step 1509 when the first voice includes the first command, and performs steps 1505 and 1506 in stage a when the first voice does not include the first command.

When the second voice is received, the second voice recognition processor 180 may determine whether the second voice includes a second command in step 1509 and, when the second voice includes the second command, perform an operation corresponding to the second command.

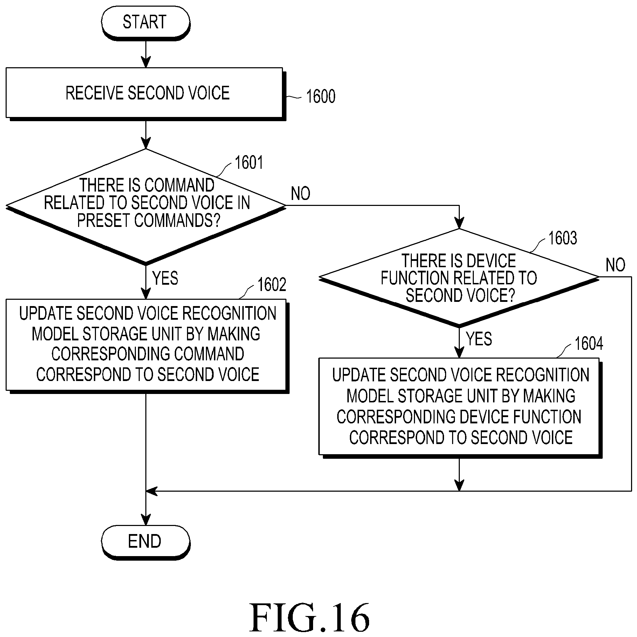

FIG. 16 illustrates a process of upgrading a voice recognition model through the third voice recognition processor according to illustrative examples not forming part of the invention.

In step 1600, the third voice recognition processor 190 recognizes a second voice.

The third voice recognition processor 190 may determine whether there is a command related to the second voice in preset commands in step 1601. The third voice recognition processor 190 may proceed to step 1602 when there is the command related to the second voice, and proceed to step 1603 when there is no command related to the second voice. For example, when the recognized second voice is "Begin", the third voice recognition processor 190 may determine whether there is a command related to "Begin" or/and a command similar to "Begin".

In step 1602, the third voice recognition processor 190 may update the second voice recognition model storage unit 222 by making the corresponding command correspond to the recognized second voice.

When a command for starting the reproduction of a video is configured as "Start" among video player application functions which can reproduce the video, if it is determined that the command related to or/and similar to the recognized "Begin" is "Start", the third voice recognition processor 190 may update the second voice recognition model storage unit 222 by making the recognized "Begin" correspond to "Start". In other words, the third voice recognition processor 190 may further add and store "Begin" as well as "Start" in the command for starting the reproduction of the video among the video player application functions which can reproduce the video.

When there is no command related to the second voice, the third voice recognition processor 190 determines whether there is a device function related to the second voice in step 1603. The third voice recognition processor 190 proceeds to step 1604 when there is the device function related to the second voice, and terminates a command update operation when there is no device function related to the second voice. For example, when the video player application is being executed and the second voice corresponds to "stop", the third voice recognition processor 190 may determine whether there is a video player function related to "stop".

In step 1604, the third voice recognition processor 190 may update the second voice recognition model storage unit 222 by making the corresponding device function correspond to the recognized second voice. For example, when the video player function related to "stop" is "reproduction stop", the third voice recognition processor 190 may configure and store "stop" as a command for performing the "reproduction stop" function.

According to various examples, the first voice recognition processor, the second voice recognition processor, and the third voice recognition processor may perform voice recognition even in a state where a predetermined application is being executed or/and the electronic device is in an idle mode. In order to reduce consumption of standby power, the first voice recognition processor, the second voice recognition processor, and the third voice recognition processor may recognize only a wake-up command (for example, "Hi Galaxy") in the idle mode, but may recognize all commands in a mode which is not the idle mode.

According to various examples, when "Hi Galaxy" is received while a predetermined application is executed, the first voice recognition processor 170 and/or the second voice recognition processor 180 may execute an application which can perform natural language voice recognition and recognize the received "Hi Galaxy". Thereafter, when "open camera" is received, the first voice recognition processor 170 may transfer "open camera" to the third voice recognition processor 190. When a result of the recognition is received from the third voice recognition processor 190, the first voice recognition processor 170 may execute a camera application according to the recognition result. Further, the second voice recognition processor 180 may recognize the received "open camera" and execute the camera application.

According to various examples, when "Hi Galaxy" is received while a music player application is executed by the second voice recognition processor, the first voice recognition processor 170 and/or the second voice recognition processor 180 may execute an application which can perform natural language voice recognition and recognize the received "Hi Galaxy". Thereafter, when "open camera" is received, the first voice recognition processor 170 may transfer "open camera" to the third voice recognition processor 190. When a result of the recognition is received from the third voice recognition processor 190, the first voice recognition processor 170 may execute a camera application according to the recognition result. Further, the second voice recognition processor 180 may recognize the received "open camera" and execute the camera application.

When a command of "play", "pause", "next", or the like, which is designated to control the music player application, is input, the second voice recognition processor 180 may recognize the input and perform a function of the related music player application.

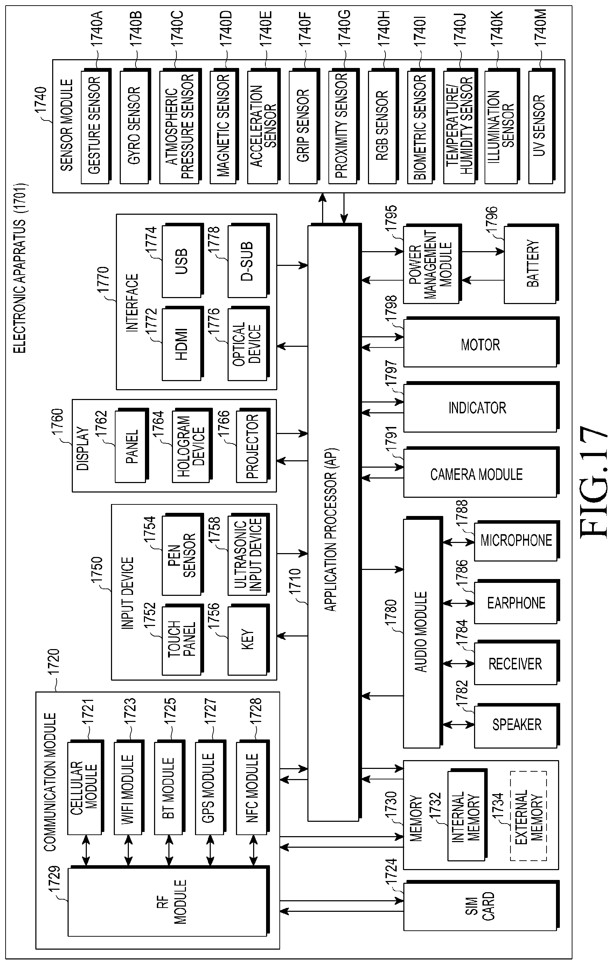

FIG. 17 is a block diagram 1700 of an electronic device 1701 according to various embodiments.

According to various embodiments of the present disclosure, the electronic device 1701 may constitute, for example, all of the electronic device 101 illustrated in FIG. 1. Referring to FIG. 17, the electronic device 1701 may include at least one Application Processor (AP) 1710, a communication module 1720, a Subscriber Identifier Module (SIM) card 1724, a memory 1730, a sensor module 1740, an input device 1750, a display 1760, an interface 1770, an audio module 1780, a camera module 1791, a power management module 1795, a battery 1796, an indicator 1797, and a motor 1798.

The AP 1710 may control a plurality of hardware or software components connected thereto by driving an operating system or an application program, process various types of data including multimedia data, and perform calculations. The AP 1710 may be implemented by, for example, a System on Chip (SoC). According to an embodiment, the AP 1710 may further include a Graphic Processing Unit (GPU) (not shown).

The communication module 1720 (for example, the communication interface 160) may perform data transmission/reception in communication between the electronic device 1701 (for example, the electronic device 101) and other electronic devices (for example, the electronic device 104 or the server 106) connected thereto through a network. According to an embodiment, the communication module 1720 may include a cellular module 1721, a Wi-Fi module 1723, a BT module 1725, a GPS module 1727, an NFC module 1728, and a Radio Frequency (RF) module 1729.

The cellular module 1721 may provide a voice call, a video call, a text service, an Internet service, and the like through a communication network (for example, LTE, LTE-A, CDMA, WCDMA, UMTS, WiBro, GSM, or the like). Furthermore, the cellular module 1721 may distinguish and authenticate electronic devices within a communication network using a subscriber identification module (for example, the SIM card 1724). According to an embodiment, the cellular module 1721 may perform at least some of the functions which may be provided by the AP 1710. For example, the cellular module 1721 may perform at least some of the multimedia control functions.

According to an embodiment, the cellular module 1721 may include a Communication Processor (CP). Further, the cellular module 1721 may be implemented by, for example, an SoC. Although the elements such as the cellular module 1721 (for example, the communication processor), the memory 1730, and the power management module 1795 are illustrated to be separate from the AP 1710 in FIG. 17, the AP 1710 may be implemented to include at least some of the above described elements (for example, the cellular module 1710) according to one embodiment.

According to an embodiment, the AP 1710 or the cellular module 1721 (for example, communication processor) may load a command or data received from at least one of a non-volatile memory and other elements connected to each of the AP 1710 and the cellular module 1721 to a volatile memory and process the loaded command or data. Further, the AP 1710 or the cellular module 1721 may store data received from at least one of other elements or created by at least one of other elements in a non-volatile memory.

Each of the Wi-Fi module 1723, the BT module 1725, the GPS module 1727, and the NFC module 1728 may include, for example, a processor for processing data transmitted/received through the corresponding module. Although the cellular module 1721, the Wi-Fi module 1723, the BT module 1725, the GPS module 1727, and the NFC module 1728 are illustrated as individual blocks in FIG. 8, at least some (for example, two or more) of the cellular module 1721, the Wi-Fi module 1723, the BT module 1725, the GPS module 1727, and the NFC module 1728 may be included within one Integrated Chip (IC) or one IC package. For example, at least some (for example, the communication processor corresponding to the cellular module 1721 and the Wi-Fi processor corresponding to the Wi-Fi module 1723) of processors corresponding to the cellular module 1721, the Wi-Fi module 1723, the BT module 1725, the GPS module 1727, and the NFC module 228 may be implemented as one SoC.

The RF module 1729 may transmit/receive data, for example, an RF signal. Although not illustrated, the RF module 1729 may include, for example, a transceiver, a Power Amp Module (PAM), a frequency filter, a Low Noise Amplifier (LNA), or the like. Further, the RF module 1729 may further include a component, such as a conductor, a conductive wire, or the like, for transmitting/receiving an electromagnetic wave in a free space in wireless communication. Although the cellular module 1721, the Wi-Fi module 1723, the BT module 1725, the GPS module 1727, and the NFC module 1728 are illustrated to share one RF module 1729 in FIG. 17, at least one of the cellular module 1721, the Wi-Fi module 1723, the BT module 1725, the GPS module 1727, and the NFC module 1728 may transmit/receive the RF signal through a separate RF module.

The SIM card 1724 may be a card including a subscriber identification module, and may be inserted into a slot formed in a particular portion of the electronic device. The SIM card 1724 may include unique identification information (for example, an Integrated Circuit Card Identifier (ICCID)) or subscriber information (for example, an International Mobile Subscriber Identity (IMSI)).

The memory 1730 (for example, the memory 130) may include an internal memory 1732 or an external memory 1734. The internal memory 1732 may include at least one of a volatile memory (for example, a Dynamic Random Access Memory (DRAM), a Static RAM (SRAM), a Synchronous Dynamic RAM (SDRAM), and the like) and a non-volatile memory (for example, a One Time Programmable Read Only Memory (OTPROM), a Programmable ROM (PROM), an Erasable and Programmable ROM (EPROM), an Electrically Erasable and Programmable ROM (EEPROM), a mask ROM, a flash ROM, a NAND flash memory, a NOR flash memory, and the like).

According to an embodiment, the internal memory 1732 may be a Solid State Drive (SSD). The external memory 1734 may further include a flash drive, for example, a Compact Flash (CF), a Secure Digital (SD), a Micro Secure Digital (Micro-SD), a Mini Secure Digital (Mini-SD), an extreme Digital (xD), a memory stick or the like. The external memory 1734 may be functionally connected to the electronic device 1701 through various interfaces. According to an embodiment, the electronic device 1701 may further include a storage device (or storage medium) such as a hard drive.

The sensor module 1740 may measure a physical quantity or detect an operation state of the electronic device 1701, and may convert the measured or detected information to an electrical signal. The sensor module 1740 may include, for example, at least one of a gesture sensor 1740A, a gyro sensor 1740B, an atmospheric pressure sensor 1740C, a magnetic sensor 1740D, an acceleration sensor 1740E, a grip sensor 1740F, a proximity sensor 1740G, a color sensor 1740H (for example, red, green, and blue (RGB) sensor), a biometric sensor 1740I, a temperature/humidity sensor 1740J, an illumination sensor 1740K, and an Ultra Violet (UV) sensor 1740M. Additionally or alternatively, the sensor module 1740 may include, for example, an E-nose sensor (not illustrated), an electromyography (EMG) sensor (not illustrated), an electroencephalogram (EEG) sensor (not illustrated), an electrocardiogram (ECG) sensor (not illustrated), an Infrared (IR) sensor (not shown), an iris sensor (not illustrated), a fingerprint sensor (not shown), and the like. The sensor module 1740 may further include a control circuit for controlling at least one sensor included therein.

The input device 1750 may include a touch panel 1752, a (digital) pen sensor 1754, a key 1756, or an ultrasonic input device 1758. The touch panel 1752 may recognize a touch input in at least one type of, for example, a capacitive type, a resistive type, an infrared type, and an ultrasonic type. The touch panel 1752 may further include a control circuit. A capacitive type touch panel may recognize a physical contact or proximity. The touch panel 1752 may further include a tactile layer. In this instance, the touch panel 1752 may provide a tactile reaction to a user.

The (digital) pen sensor 1754 may be implemented, for example, using a method identical or similar to a method of receiving a touch input of a user, or using a separate recognition sheet. The key 1756 may include, for example, a physical button, an optical key, or a keypad. The ultrasonic input device 1758 is a device that may sense an ultrasonic signal of a sound wave generated by an input tool through a microphone (for example, the microphone 1788) of the electronic device 1701, and identify data, and is capable of performing wireless recognition. According to an embodiment of the present disclosure, the electronic device 1701 may also receive a user input from an external device (for example, a computer or server) connected thereto, using the communication module 1720.

The display 1760 (for example, the display 150) may include a panel 1762, a hologram device 1764, and a projector 1766. The panel 1762 may be, for example, a Liquid Crystal Display (LCD), Active-Matrix Organic Light Emitting Diode (AM-OLED), or the like. The panel 1762 may be implemented to be, for example, flexible, transparent, or wearable. The panel 1762 and the touch panel 1752 may be configured together as a single module. The hologram device 1764 may show a stereoscopic image in the air by using interference of light. The projector 1766 may project light onto a screen to display an image. For example, the screen may be located inside or outside the electronic device 1701. According to an embodiment of the present disclosure, the display 1760 may further include a control circuit for controlling the panel 1762, the hologram device 1764, or the projector 1766.

The interface 1770 may include, for example, a High-Definition Multimedia Interface (HDMI) 1772, a Universal Serial Bus (USB) 1774, an optical interface 1776, or a D-subminiature (D-sub) 1778. The interface 1770 may be included in, for example, the communication interface 160 illustrated in FIG. 1. Additionally or alternatively, the interface 1770 may include, for example, a Mobile High-definition Link (MHL) interface, a Secure Digital (SD) card/Multi-Media Card (MMC) interface, or an Infrared Data Association (IrDA) standard interface.

The audio module 1780 may bidirectionally convert a sound and an electric signal. At least some elements of the audio module 1780 may be included in, for example, the input/output interface 140 illustrated in FIG. 1. The audio module 1780 may process sound information input or output through, for example, a speaker 1782, a receiver 1784, earphones 1786, the microphone 1788 or the like.

The camera module 1791 is a device which may photograph a still image and a video. According to an embodiment, the camera module 1791 may include one or more image sensors (for example, a front sensor or a rear sensor), a lens (not illustrated), an Image Signal Processor (ISP) (not illustrated) or a flash (not illustrated) (for example, an LED or xenon lamp).

The power management module 1795 may manage power of the electronic device 1701. Although not illustrated, the power management module 1795 may include, for example, a Power Management Integrated Circuit (PMIC), a charger Integrated Circuit (IC), or a battery or fuel gauge.

The PMIC may be mounted within, for example, an integrated circuit or an SoC semiconductor. Charging methods may be classified into a wired charging method and a wireless charging method. The charger IC may charge a battery and prevent over voltage or over current from a charger. According to an embodiment, the charger IC may include a charger IC for at least one of the wired charging method and the wireless charging method. Examples of the wireless charging may include magnetic resonance charging, magnetic induction charging, and electromagnetic charging, and an additional circuit such as a coil loop, a resonance circuit, and a rectifier may be added for the wireless charging.

The battery fuel gauge may measure, for example, the remaining amount of battery, a charging voltage and current, or temperature. The battery 1796 may store or generate electricity, and may supply power to the electronic device 1701 by using the stored or generated electricity. The battery 1796 may include, for example, a rechargeable battery or a solar battery.

The indicator 1797 may display a particular status of the electronic device 1701 or a part thereof (for example, the AP 1710), for example, a booting status, a message status, a charging status, or the like. The motor 1798 may convert an electric signal to a mechanical vibration. Although not illustrated, the electronic device 1701 may include a processing device (for example, a GPU) for supporting mobile TV. The processing device for supporting the mobile TV may process media data according to a standard of Digital Multimedia Broadcasting (DMB), Digital Video Broadcasting (DVB), media flow or the like.

The above described components of the electronic device according to various embodiments of the present invention may be formed of one or more components, and a name of a corresponding component element may be changed based on the type of electronic device. The electronic device according to the present invention may include one or more of the aforementioned components or may further include other additional components. Further, some of the components of the electronic device according to the various embodiments of the present invention may be combined to form a single entity, and thus, may equivalently execute functions of the corresponding elements prior to the combination.

The term "module" used in the various embodiments of the present invention may refer to, for example, a unit including one or more combinations of hardware, software, and firmware. The "module" may be interchangeable with a term, such as a unit, a logic, a logical block, a component, or a circuit. The "module" may be the smallest unit of an integrated component or a part thereof. The "module" may be a minimum unit for performing one or more functions or a part thereof. The "module" may be mechanically or electronically implemented. For example, the "module according to the various embodiments of the present invention may include at least one of an Application-Specific Integrated Circuit (ASIC) chip, a Field-Programmable Gate Arrays (FPGA), and a programmable-logic device for performing operations which have been known or are to be developed hereinafter.

According to various embodiments, at least some of the devices (e.g., modules or functions thereof) or methods (e.g., operations) according to the various embodiments of the present invention may be implemented as, for example, instructions stored computer readable storage media in the form of programming modules. When the command is executed by one or more processors (for example, the processor 210), the one or more processors may execute a function corresponding to the command. The computer-readable storage medium may be, for example, the memory 130. At least some of the programming modules may be implemented (for example, executed) by, for example, the processor 210. At least a part of the programming module may, for example, include a module, a program, a routine, a set of instructions, or a process for performing at least one function.

The computer readable recording medium may include magnetic media such as a hard disc, a floppy disc, and a magnetic tape, optical media such as a compact disc read only memory (CD-ROM) and a digital versatile disc (DVD), magneto-optical media such as a floptical disk, and hardware devices specifically configured to store and execute program commands, such as a read only memory (ROM), a random access memory (RAM), and a flash memory. In addition, the program instructions may include high class language codes, which can be executed in a computer by using an interpreter, as well as machine codes made by a compiler. The aforementioned hardware device may be configured to operate as one or more software modules in order to perform the operation of various embodiments of the present invention, and vice versa.

A module or a programming module according to the present invention may include the described component elements, additional component elements may be included. Operations executed by a module, a programming module, or other component elements according to various embodiments of the present invention may be executed sequentially, in parallel, repeatedly, or in a heuristic manner. Furthermore, some operations may be executed in a different order or other operations may be added.

The embodiments of the present invention disclosed in the specification and the drawings are only particular examples proposed in order to easily describe the technical matters of the present invention and help with comprehension of the present invention, and do not limit the scope of the present invention.

## Claims

1. A method of performing speech recognition by an electronic device including a first speech recognition device (170) comprising a processor operating with low power and a second speech recognition device (180) comprising a high performance processor, the method comprising:
when an audio signal is not output from a speaker of the electronic device, receiving a first speech by the first speech recognition device (170);
when an audio signal is output from the speaker of the electronic device, receiving the first speech by the second speech recognition device (180) of the electronic device;
when the first speech is received by the first speech recognition device (170) and the first speech recognition device (170) recognizes a predetermined command in the first speech, transferring a received second speech to an external electronic device and recognizing the received second speech through the external electronic device; and
when the first speech is received by the second speech recognition device (180) and the second speech recognition device (180) recognizes the predetermined command in the first speech, recognizing a second command in the received second speech, and performing an operation based on the recognized second command.

2. The method of claim 1, further comprising performing an operation based on the received second speech recognized by the external electronic device.

3. The method of claim 1, further comprising:
when the first speech is received by the first speech recognition device (170) and the first speech recognition device (170) does not recognize the predetermined command in the first speech, the first speech recognition device (170) transfers the first speech to the second speech recognition device (180); and
when the first speech is transferred to the second speech recognition device (180), the second speech recognition device (180) recognizes the predetermined command in the first speech, and the second speech recognition device (180) recognizes the second command in the received second speech, performing the operation based on the recognized second command.

4. The method of claim 3, further comprising:
when the first speech is transferred to the first speech recognition device (170), the first speech recognition device (170) recognizes the predetermined command in the first speech, and when the second speech is received by the first speech recognition device (170), transferring the received second speech to a third speech recognition device (190); and
performing an operation based on the received second speech recognized by the third speech recognition device (190).

5. A machine-readable storage medium having recorded thereon a program for executing a method for operating an electronic device according to any one of claims 1 to 4.

6. An electronic device comprising:
a first speech recognition device (170) comprising a processor operating with low power;
a second speech recognition device (180) comprising a high performance processor; and
a processor configured to:
when an audio signal is not output from a speaker of the electronic device, receive a first speech by using the first speech recognition device (170) of the electronic device; and
when an audio signal is output from the speaker of the electronic device, receive the first speech by using the second speech recognition device of the electronic device,
wherein when the first speech is received by the first speech recognition device (170) and the first speech recognition device (170) recognizes a predetermined command in the first speech, the first speech recognition device (170) is configured to transfer a received second speech to an external electronic device and for recognizing the received second speech through the external electronic device; and
wherein when the first speech is received by the second speech recognition device (180), and when the second speech recognition device (180) recognizes the predetermined command in the first speech, the second speech recognition device (180) is configured to recognize a second command in the received second speech and to perform an operation based on the recognized second command.

7. The electronic device of claim 6, wherein, when the first speech acquired by the first speech recognition device (170) does not include the predetermined command, the second speech recognition device (180) is configured to acquire the first speech and, when the first speech acquired by the second speech recognition device (180) includes the predetermined command, to recognize the additionally recognized second speech and then perform an operation based on the recognized second speech.

## Patentansprüche

1. Verfahren zum Durchführen von Spracherkennung durch eine elektronische Vorrichtung, die eine erste Spracherkennungsvorrichtung (170), die einen Prozessor umfasst, der mit geringer Leistung arbeitet, und eine zweite Spracherkennungsvorrichtung (180), die einen Hochleistungsprozessor umfasst, beinhaltet, wobei das Verfahren Folgendes umfasst:
wenn kein Audiosignal von einem Lautsprecher der elektronischen Vorrichtung ausgegeben wird, Empfangen einer ersten Sprache durch die erste Spracherkennungsvorrichtung (170),
wenn ein Audiosignal von dem Lautsprecher der elektronischen Vorrichtung ausgegeben wird, Empfangen der ersten Sprache durch die zweite Spracherkennungsvorrichtung (180) der elektronischen Vorrichtung;
wenn die erste Sprache durch die erste Spracherkennungsvorrichtung (170) empfangen wird und die erste Spracherkennungsvorrichtung (170) einen vorbestimmten Befehl in der ersten Sprache erkennt, Übertragen einer empfangenen zweiten Sprache an eine externe elektronische Vorrichtung und Erkennen der empfangenen zweiten Sprache durch die externe elektronische Vorrichtung; und
wenn die erste Sprache durch die zweite Spracherkennungsvorrichtung (180) empfangen wird und die zweite Spracherkennungsvorrichtung (180) den vorbestimmten Befehl in der ersten Sprache erkennt, Erkennen eines zweiten Befehls in der empfangenen zweiten Sprache und Durchführen eines Vorgangs basierend auf dem erkannten zweiten Befehl.

2. Verfahren nach Anspruch 1, ferner umfassend Durchführen eines Vorgangs basierend auf der empfangenen zweiten Sprache, die durch die externe elektronische Vorrichtung erkannt wird.

3. Verfahren nach Anspruch 1, ferner umfassend:
wenn die erste Sprache durch die erste Spracherkennungsvorrichtung (170) empfangen wird und die erste Spracherkennungsvorrichtung (170) den vorbestimmten Befehl in der ersten Sprache nicht erkennt, überträgt die erste Spracherkennungsvorrichtung (170) die erste Sprache an die zweite Spracherkennungsvorrichtung (180); und
wenn die erste Sprache an die zweite Spracherkennungsvorrichtung (180) übertragen wird, die zweite Spracherkennungsvorrichtung (180) den vorbestimmten Befehl in der ersten Sprache erkennt und die zweite Spracherkennungsvorrichtung (180) den zweiten Befehl in der empfangenen zweiten Sprache erkennt, Durchführen des Vorgangs basierend auf dem erkannten zweiten Befehl.

4. Verfahren nach Anspruch 3, ferner umfassend:
wenn die erste Sprache an die erste Spracherkennungsvorrichtung (170) übertragen wird, die erste Spracherkennungsvorrichtung (170) den vorbestimmten Befehl in der ersten Sprache erkennt und wenn die zweite Sprache durch die erste Spracherkennungsvorrichtung (170) empfangen wird, Übertragen der empfangenen zweiten Sprache an eine dritte Spracherkennungsvorrichtung (190); und
Durchführen eines Vorgangs basierend auf der empfangenen zweiten Sprache, die durch die dritte Spracherkennungsvorrichtung (190) erkannt wird.

5. Maschinenlesbares Speichermedium, auf dem ein Programm zum Ausführen eines Verfahrens zum Betreiben einer elektronischen Vorrichtung nach einem der Ansprüche 1 bis 4 aufgezeichnet ist.

6. Elektronische Vorrichtung, umfassend:
eine erste Spracherkennungsvorrichtung (170), die einen Prozessor umfasst, der mit geringer Leistung arbeitet;
eine zweite Spracherkennungsvorrichtung (180), die einen Hochleistungsprozessor umfasst; und
einen Prozessor, der für Folgendes konfiguriert ist:
wenn kein Audiosignal von einem Lautsprecher der elektronischen Vorrichtung ausgegeben wird, Empfangen einer ersten Sprache unter Verwendung der ersten Spracherkennungsvorrichtung (170) der elektronischen Vorrichtung; und
wenn ein Audiosignal von dem Lautsprecher der elektronischen Vorrichtung ausgegeben wird, Empfangen der ersten Sprache unter Verwendung der zweiten Spracherkennungsvorrichtung der elektronischen Vorrichtung,
wobei, wenn die erste Sprache durch die erste Spracherkennungsvorrichtung (170) empfangen wird und die erste Spracherkennungsvorrichtung (170) einen vorbestimmten Befehl in der ersten Sprache erkennt, die erste Spracherkennungsvorrichtung (170) konfiguriert ist, um eine empfangene zweite Sprache an eine externe elektronische Vorrichtung zu übertragen und zum Erkennen der empfangenen zweiten Sprache durch die externe elektronische Vorrichtung; und
wobei, wenn die erste Sprache durch die zweite Spracherkennungsvorrichtung (180) empfangen wird und wenn die zweite Spracherkennungsvorrichtung (180) den vorbestimmten Befehl in der ersten Sprache erkennt, die zweite Spracherkennungsvorrichtung (180) konfiguriert ist, um einen zweiten Befehl in der empfangenen zweiten Sprache zu erkennen und um einen Vorgang basierend auf dem erkannten zweiten Befehl durchzuführen.

7. Elektronische Vorrichtung nach Anspruch 6, wobei, wenn die erste Sprache, die durch die erste Spracherkennungsvorrichtung (170) erfasst wird, den vorbestimmten Befehl nicht beinhaltet, die zweite Spracherkennungsvorrichtung (180) konfiguriert ist, um die erste Sprache zu erfassen, und wenn die erste Sprache, die durch die zweite Spracherkennungsvorrichtung (180) erfasst wird, den vorbestimmten Befehl beinhaltet, um die zusätzlich erkannte zweite Sprache zu erkennen und dann einen Vorgang basierend auf der erkannten zweiten Sprache durchzuführen.

## Revendications

1. Procédé d'exécution d'une reconnaissance vocale par un dispositif électronique comprenant un premier dispositif de reconnaissance vocale (170) comprenant un processeur fonctionnant à faible puissance et un deuxième dispositif de reconnaissance vocale (180) comprenant un processeur haute performance, le procédé comprenant :
lorsqu'un signal audio n'est pas émis par un haut-parleur du dispositif électronique, la réception d'une première parole par le premier dispositif de reconnaissance vocale (170) ;
lorsqu'un signal audio est émis par le haut-parleur du dispositif électronique, la réception de la première parole par le deuxième dispositif de reconnaissance vocale (180) du dispositif électronique ;
lorsque la première parole est reçue par le premier dispositif de reconnaissance vocale (170) et que le premier dispositif de reconnaissance vocale (170) reconnaît une commande prédéterminée dans la première parole, le transfert d'une seconde parole reçue à un dispositif électronique externe et la reconnaissance de la seconde parole reçue par l'appareil électronique externe ; et
lorsque la première parole est reçue par le deuxième dispositif de reconnaissance vocale (180) et que le deuxième dispositif de reconnaissance vocale (180) reconnaît la commande prédéterminée dans la première parole, la reconnaissance d'une seconde commande dans la seconde parole reçue, et l'exécution d'une opération sur la base de la seconde commande reconnue.

2. Procédé selon la revendication 1, comprenant en outre l'exécution d'une opération sur la base de la seconde parole reçue reconnue par le dispositif électronique externe.

3. Procédé de la revendication 1, comprenant en outre :
lorsque la première parole est reçue par le premier dispositif de reconnaissance vocale (170) et que le premier dispositif de reconnaissance vocale (170) ne reconnaît pas la commande prédéterminée dans la première parole, le premier dispositif de reconnaissance vocale (170) transfère la première parole au deuxième dispositif de reconnaissance vocale (180) ; et
lorsque la première parole est transférée au deuxième dispositif de reconnaissance vocale (180), le deuxième dispositif de reconnaissance vocale (180) reconnaît la commande prédéterminée dans la première parole, et le deuxième dispositif de reconnaissance vocale (180) reconnaît la seconde commande dans la seconde parole reçue, l'exécution de l'opération sur la base de la seconde commande reconnue.

4. Procédé selon la revendication 3, comprenant en outre :
lorsque la première parole est transférée au premier dispositif de reconnaissance vocale (170), le premier dispositif de reconnaissance vocale (170) reconnaît la commande prédéterminée dans la première parole, et lorsque la seconde parole est reçue par le premier dispositif de reconnaissance vocale (170), le transfert de la seconde parole reçue vers un troisième dispositif de reconnaissance vocale (190) ; et
l'exécution d'une opération sur la base de la seconde parole reçue reconnue par le troisième dispositif de reconnaissance vocale (190).

5. Support de stockage lisible par machine sur lequel est enregistré un programme pour exécuter un procédé de fonctionnement d'un dispositif électronique selon l'une quelconque des revendications 1 à 4.

6. Dispositif électronique comprenant :
un premier dispositif de reconnaissance vocale (170) comprenant un processeur fonctionnant à faible puissance ;
un deuxième dispositif de reconnaissance vocale (180) comprenant un processeur hautes performances ; et
un processeur configuré pour :
lorsqu'un signal audio n'est pas émis par un haut-parleur du dispositif électronique, recevoir une première parole en utilisant le premier dispositif de reconnaissance vocale (170) du dispositif électronique ; et
lorsqu'un signal audio est émis par le haut-parleur du dispositif électronique, recevoir la première parole en utilisant le deuxième dispositif de reconnaissance vocale du dispositif électronique,
dans lequel lorsque la première parole est reçue par le premier dispositif de reconnaissance vocale (170) et que le premier dispositif de reconnaissance vocale (170) reconnaît une commande prédéterminée dans la première parole, le premier dispositif de reconnaissance vocale (170) est configuré pour transférer une seconde parole reçue à un dispositif électronique externe et pour reconnaître la seconde parole reçue par l'intermédiaire du dispositif électronique externe ; et
dans lequel lorsque la première parole est reçue par le deuxième dispositif de reconnaissance vocale (180), et lorsque le deuxième dispositif de reconnaissance vocale (180) reconnaît la commande prédéterminée dans la première parole, le deuxième dispositif de reconnaissance vocale (180) est configuré pour reconnaître une seconde commande dans la seconde parole reçue et pour effectuer une opération basée sur la seconde commande reconnue.

7. Dispositif électronique selon la revendication 6, dans lequel, lorsque la première parole acquise par le premier dispositif de reconnaissance vocale (170) ne comprend pas la commande prédéterminée, le deuxième dispositif de reconnaissance vocale (180) est configuré pour acquérir la première parole et, lorsque la première la parole acquise par le deuxième dispositif de reconnaissance vocale (180) comprend la commande prédéterminée, pour reconnaître la seconde parole reconnue en plus et ensuite exécuter une opération sur la base de la seconde parole reconnue.
